# EUROPEAN PATENT SPECIFICATION

(11) **EP 3 860 369 B1**
(45) Date of publication and mention of the grant of the patent: **08.05.2024**
(21) Application number: 20714159.9
(22) Date of filing: 18.03.2020
(51) Int. Cl.: A23L 2/56, A23L 2/66, A23L 27/20, A23L 27/30, A23L 29/00

(54) **FLAVOR SYSTEM**
GESCHMACKSSYSTEM
SYSTÈME D'ARÔME

(30) Priority: 28.03.2019 US 201962825124 P; 16.05.2019 EP 19174941
(43) Date of publication of application: 11.08.2021
(73) Proprietor: Firmenich SA, 1242 Satigny (CH)
(72) Inventor: GELIN, Jean-Luc, 1242 Satigny (CH); SALORD, Patrick, 1242 Satigny (CH); ROZCZKA, Caroline, 1242 Satigny (CH)
(74) Representative: Strych, Sebastian
(86) International application number: PCT/EP2020/057494
(87) International publication number: WO 2020/193321

(56) References cited:
- EP-A1- 2 752 120
- EP-A1- 2 832 234
- EP-A1- 3 138 411
- EP-A1- 3 378 334
- WO-A1-2008/141333
- WO-A1-2014/095564
- WO-A1-2019/048564
- CN-A- 109 077 287
- RU-C2- 2 468 606
- US-A1- 2002 034 570
- US-A1- 2014 017 378
- US-A1- 2018 035 702

## Description

### TECHNICAL FIELD

The various aspects presented herein relate to methods and compositions for use in flavored articles containing non-animal proteins, having an improved sensory profile.

### BACKGROUND

The use of non-animal proteins in flavored articles to replace animal raw materials such as, for example, egg or milk is becoming increasingly important due to the benefits of protein in the diet. While consumers expect flavored articles, such as, for example, foods or beverages to have multi-functional benefits, consumers still have high expectations that those products deliver great taste along with efficacy in terms of health benefits. Because each type of protein has its own inherent taste, formulating protein into flavored articles can produce distinctive tastes and textures perceived as unappealing. For example, products made from leguminous plants, such as soy or pea, display a flavor profile described as grassy, beany, green, earthy, nutty or bitter. Additionally, non-animal proteins also interact with flavor compounds and result in the reduction of flavor intensity, i.e. flavor fade. In some cases, this reduction in flavor intensity may occur as the result of the absorption or binding of volatile flavor compounds to plant proteins in both solid state and in aqueous systems.

Document WO 2014/095564 A1 relates to the use of cinnamic acid derived amides with other ingredients to confer, enhance, improve or modify the kokumi or umarni taste of a flavored article. Document EP 3 378 334 A1 relates to a Method for producing a flavour composition comprising providing a composition substantially comprising disrupted yeast cell walls and contacting the composition substantially comprising disrupted yeast cell walls with a glucanase and with an endoprotease, followed by separating a liquid fraction by solid / liquid separation to provide the flavour composition. Document EP 2 752120 A1 relates to a a sweetener having a sucrose-like sweetness, comprising sugar alcohol and/or an intense sweetener, and a yeast extract containing a peptide. Document US 2002/0034570 A1 relates to Cheese flavoring containing both volatile and non-volatile components which comprise constituents which contribute to the taste sensation "cheese". Document EP 2 832 234 A1 relates to imidazo[1,2-a]pyridine-ylmethyl-derivatives and to the use thereof for producing, imparting, or intensifying an umami flavor. Document EP 3 138 411 A1 relates to food or beverage compositions, comprising one or more steviol glycosides as sweetening agents, and yeast extract or yeast autolysate. Document WO 2008/141333 A1 relates to edible orally delivered products, which provide an enhanced perception of an active substance, such as a sweetener. Document WO 2019/048564 A1 relates to a method for masking the bitter flavour of protein-rich food products, by using vanillin and/or ethylvanillin as an agent. Documents US 2014/0017378 A1 and US 2018/0035702 A1 relate to a composition including a blend of glucosylated steviol glycosides and residual steviol glycosides which can modify the intensity of a taste and/or flavor in a food or beverage product.

Challenges remain with respect to non-animal protein containing flavored articles including, difficulties in attenuating undesirable sensory properties (such as, for example, undesirable off-notes, or undesirable off-taste); selecting appropriate flavors; controlling the proper level of flavoring; achieving the desired flavor intensity in a finished flavored article; and the like.

Accordingly, there remains a need for non-animal protein ingredients and products containing non-animal proteins that exhibit improved flavor, having reduced undesirable sensory properties.

### SUMMARY

In a first aspect the present disclosure provides a composition according to claim 1.

In some embodiments thereof, the composition, when added to a flavored article comprising at least one non-animal protein, improves flavor profile of the flavored article. In some further such embodiments, the improved flavor profile is selected from the group consisting of: a reduced perception of bitterness by a subject, a reduced perception of astringency by a subject, an increased perception of sweetness by a subject, a reduced perception of green character, an increased perception of mouthcoating by a subject, an increased perception of thickness by a subject, an increased perception of cream character by a subject, an increased perception of vanilla character by a subject, a reduced perception of cereal character by a subject, and any combination thereof.

In a second aspect, the present disclosure provides a use of a composition according to the first aspect, and any embodiments thereof, to improve the flavor profile of a flavored article comprising at least one non-animal protein, wherein the improved flavor profile is selected from the group consisting of: a reduced perception of bitterness by a subject, a reduced perception of astringency by a subject, an increased perception of sweetness by a subject, a reduced perception of green character, an increased perception of mouthcoating by a subject, an increased perception of thickness by a subject, an increased perception of cream character by a subject, an increased perception of vanilla character by a subject, a reduced perception of cereal character by a subject, and any combination thereof.

In a third aspect, the present disclosure provides a flavored article comprising at least one non-animal protein and a composition according to the first aspect and any embodiments thereof, wherein a concentration of yeast lysate in the flavored article ranges from 0.0025 weight percent to 0.2 weight percent, based on the total weight of the flavored article.

In a fourth aspect, the present disclosure provides a method of producing a flavored article according to the third aspect, the method comprising introducing a composition according to the first aspect, and any embodiments thereof, to a flavored article comprising at least one non-animal protein. In some embodiments, the method improves flavor profile of a flavored article comprising at least one non-animal protein. In some further embodiments, the improved flavor profile is selected from the group consisting of: a reduced perception of bitterness by a subject, a reduced perception of astringency by a subject, an increased perception of sweetness by a subject, a reduced perception of green character, an increased perception of mouthcoating by a subject, an increased perception of thickness by a subject, an increased perception of cream character by a subject, an increased perception of vanilla character by a subject, a reduced perception of cereal character by a subject, and any combination thereof.

Further aspects and embodiments of the present are set forth in the accompanying drawings and in the Detailed Description.

### BRIEF DESCRIPTION OF THE DRAWINGS

FIG. 1 shows the sensory properties of a flavored article comprising a pea protein solution and compositions according to certain aspects presented herein.
FIG. 2 shows the sensory properties of a flavored article comprising a pea protein solution and compositions according to certain aspects presented herein.
FIG. 3 shows the sensory properties of a flavored article comprising a pea protein solution and compositions according to certain aspects presented herein.
FIG. 4 shows the sensory properties of a flavored article comprising a pea protein solution and compositions according to certain aspects presented herein.
FIG. 5 shows the sensory properties of a flavored article comprising a pea protein solution and compositions according to certain aspects presented herein.
FIG. 6 shows the sensory properties of a flavored article comprising a pea protein solution and compositions according to certain aspects presented herein.

### DETAILED DESCRIPTION

In the following description, reference is made to specific embodiments which may be practiced, which is shown by way of illustration. These embodiments are described in detail to enable those skilled in the art to practice the invention described herein, and it is to be understood that other embodiments may be utilized and that logical changes may be made without departing from the scope of the aspects presented herein. The following description of example embodiments is, therefore, not to be taken in a limited sense, and the scope of the various aspects presented herein is defined by the appended claims.

There exists a need for non-animal protein ingredients and products containing non-animal proteins that exhibit improved flavor together with reduced off-notes. Without intending to be limited to any particular theory, non-animal proteins, obtained from either a single source or, alternatively, more than one source, provide undesirable off-notes. Particularly, undesirable off-notes are the beany, bitter, grassy, astringent, earthy, chalky, and rancid off-notes. The term "off-note" as used herein refers to an unpleasant aroma (orthonasal sensations), flavor (retronasal sensations), taste or after-taste that develop over time after consumption of a flavored article. The compositions provided herein can attenuate the intensity (masking effect) or modify these off-notes and make them less apparent or unnoticeable. Thus, in some embodiments, non-animal proteins will thereby partly or totally lose their negative sensory traits following treatment with the compositions or methods presented herein.

In some embodiments, the total amount of the at least one non-animal protein is ranges from 2% by weight to 15% by weight, or from 2% to 12% by weight, or from 3% to 10% by weight, or from 4% to 8% by weight, or from 5% to 7% by weight, or from 6.4% to 6.5% by weight, of a flavored article, based on the total weight of the flavored article. In some embodiments, the total amount of the at least one non-animal protein is about 6.4% protein by weight, of a flavored article, based on the total weight of the flavored article. In some other embodiments, the total amount of the at least one non-animal protein is greater than 3% by weight, or greater than 4% by weight, or greater than 5% by weight, or greater than 6% by weight, of a flavored article, based on the total weight of the flavored article.

As used herein, the term "non-animal protein" refers to protein preparations made from raw materials including, but not limited to, grain (rice, millet, maize, barley, wheat, oat, sorghum, rye, teff, triticale, amaranth, buckwheat, quinoa); legumes or pulses (soybean, yellow pea, chickpeas, pigeon peas, sesame, mung beans, garbanzo, peas, fava beans, lentils, lima beans, lupins, peanuts, runner beans, kidney beans, navy beans, pinto beans, azuki beans, cowpeas, black-eyed peas); seeds and oilseeds (black mustard, India mustard, rapeseed, canola, safflower, sunflower seed, flax seed, hemp seed, poppy seed, pumpkin, chia, sesame); nuts (almond, walnut, Brazil, Macadamia, cashews, chestnuts, hazelnuts, pine, pecans, pistachio and gingko); leaf proteins; algal proteins (kelp, wakame, spirulina, chlorella, proteins from red or brown seaweeds); mycoproteins or fungal protein and insects.

Accordingly, in one aspect the present disclosure provides a composition according to claim 1.

In some embodiments thereof, the composition, when added (for example, in a sufficient amount) to a flavored article comprising at least one non-animal protein, improves a flavor profile of the flavored article. In some further embodiments, the improved flavor profile is selected from the group consisting of: a reduced perception of bitterness by a subject, a reduced perception of astringency by a subject, an increased perception of sweetness by a subject, a reduced perception of green character, an increased perception of mouthcoating by a subject, an increased perception of thickness by a subject, an increased perception of cream character by a subject, an increased perception of vanilla character by a subject, a reduced perception of cereal character by a subject, and any combination thereof.

In some embodiments, the present disclosure provides a use of a composition according to an embodiment presented herein to improve the flavor profile of a flavored article comprising at least one non-animal protein, wherein the improved flavor profile is selected from the group consisting of: a reduced perception of bitterness by a subject, a reduced perception of astringency by a subject, an increased perception of sweetness by a subject, a reduced perception of green character, an increased perception of mouthcoating by a subject, an increased perception of thickness by a subject, an increased perception of cream character by a subject, an increased perception of vanilla character by a subject, a reduced perception of cereal character by a subject, and any combination thereof.

In some embodiments, the present disclosure provides a flavored article comprising at least one non-animal protein and a composition according to an embodiment described herein.

In some embodiments, the present disclosure provides a method of producing a flavored article according to the third aspect comprising introducing a composition according to the first aspect, and any embodiments thereof, to a flavored article comprising at least one non-animal protein

As disclosed herein, the concentration of the at least one additional flavor composition, when added to the flavored article is from 0.001 to 0.5 weight percent, based on the total weight of the flavored article. Alternatively disclosed, the concentration of the at least one additional flavor composition, when added to the flavored article is from 0.001 to 0.45 weight percent, based on the total weight of the flavored article. Alternatively disclosed, in some embodiments, the concentration of the at least one additional flavor composition, when added to the flavored article is from 0.001 to 0.4 weight percent, based on the total weight of the flavored article. Alternatively disclosed, in some embodiments, the concentration of the at least one additional flavor composition, when added to the flavored article is from 0.001 to 0.35 weight percent, based on the total weight of the flavored article. Alternatively disclosed, the concentration of the at least one additional flavor composition, when added to the flavored article is from 0.001 to 0.3 weight percent, based on the total weight of the flavored article. Alternatively disclosed, the concentration of the at least one additional flavor composition, when added to the flavored article is from 0.001 to 0.25 weight percent, based on the total weight of the flavored article. Alternatively disclosed, the concentration of the at least one additional flavor composition, when added to the flavored article is from 0.001 to 0.2 weight percent, based on the total weight of the flavored article. Alternatively disclosed, the concentration of the at least one additional flavor composition, when added to the flavored article is from 0.001 to 0.15 weight percent, based on the total weight of the flavored article. Alternatively disclosed, in some embodiments, the concentration of the at least one additional flavor composition, when added to the flavored article is from 0.001 to 0.1 weight percent, based on the total weight of the flavored article. Alternatively disclosed, the concentration of the at least one additional flavor composition, when added to the flavored article is from 0.001 to 0.09 weight percent, based on the total weight of the flavored article. Alternatively disclosed, the concentration of the at least one additional flavor composition, when added to the flavored article is from 0.001 to 0.08 weight percent, based on the total weight of the flavored article. Alternatively disclosed, the concentration of the at least one additional flavor composition, when added to the flavored article is from 0.001 to 0.07 weight percent, based on the total weight of the flavored article. Alternatively disclosed, the concentration of the at least one additional flavor composition, when added to the flavored article is from 0.001 to 0.06 weight percent, based on the total weight of the flavored article. Alternatively disclosed, the concentration of the at least one additional flavor composition, when added to the flavored article is from 0.001 to 0.05 weight percent, based on the total weight of the flavored article. Alternatively disclosed, the concentration of the at least one additional flavor composition, when added to the flavored article is from 0.001 to 0.04 weight percent, based on the total weight of the flavored article. Alternatively disclosed, the concentration of the at least one additional flavor composition, when added to the flavored article is from 0.001 to 0.03 weight percent, based on the total weight of the flavored article. Alternativelydisclosed, the concentration of the at least one additional flavor composition, when added to the flavored article is from 0.001 to 0.02 weight percent, based on the total weight of the flavored article. Alternativelydisclosed, the concentration of the at least one additional flavor composition, when added to the flavored article is from 0.001 to 0.01 weight percent, based on the total weight of the flavored article.

Alternatively disclosed, the concentration of the at least one additional flavor composition, when added to the flavored article is from 0.001 to 0.009 weight percent, based on the total weight of the flavored article. Alternatively disclosed, the concentration of the at least one additional flavor composition, when added to the flavored article is from 0.001 to 0.008 weight percent, based on the total weight of the flavored article. Alternatively disclosed, the concentration of the at least one additional flavor composition, when added to the flavored article is from 0.001 to 0.007 weight percent, based on the total weight of the flavored article. Alternatively disclosed, the concentration of the at least one additional flavor composition, when added to the flavored article is from 0.001 to 0.006 weight percent, based on the total weight of the flavored article. Alternatively disclosed, the concentration of the at least one additional flavor composition, when added to the flavored article is from 0.001 to 0.005 weight percent, based on the total weight of the flavored article. Alternatively disclosed, the concentration of the at least one additional flavor composition, when added to the flavored article is from 0.001 to 0.004 weight percent, based on the total weight of the flavored article. Alternatively disclosed, the concentration of the at least one additional flavor composition, when added to the flavored article is from 0.001 to 0.003 weight percent, based on the total weight of the flavored article. Alternatively disclosed, the concentration of the at least one additional flavor composition, when added to the flavored article is from 0.001 to 0.002 weight percent, based on the total weight of the flavored article.

As disclosed herein, the concentration of the at least one additional flavor composition, when added to the flavored article is from 0.002 to 0.5 weight percent, based on the total weight of the flavored article. Alternatively disclosed, the concentration of the at least one additional flavor composition, when added to the flavored article is from 0.003 to 0.5 weight percent, based on the total weight of the flavored article. Alternatively disclosed, the concentration of the at least one additional flavor composition, when added to the flavored article is from 0.004 to 0.5 weight percent, based on the total weight of the flavored article. Alternatively disclosed, the concentration of the at least one additional flavor composition, when added to the flavored article is from 0.005 to 0.5 weight percent, based on the total weight of the flavored article. Alternatively disclosed, the concentration of the at least one additional flavor composition, when added to the flavored article is from 0.006 to 0.5 weight percent, based on the total weight of the flavored article. Alternatively disclosed, the concentration of the at least one additional flavor composition, when added to the flavored article is from 0.007 to 0.5 weight percent, based on the total weight of the flavored article. Alternatively disclosed, the concentration of the at least one additional flavor composition, when added to the flavored article is from 0.008 to 0.5 weight percent, based on the total weight of the flavored article. Alternatively disclosed, the concentration of the at least one additional flavor composition, when added to the flavored article is from 0.009 to 0.5 weight percent, based on the total weight of the flavored article. Alternatively disclosed, the concentration of the at least one additional flavor composition, when added to the flavored article is from 0.01 to 0.5 weight percent, based on the total weight of the flavored article. Alternatively disclosed, the concentration of the at least one additional flavor composition, when added to the flavored article is from 0.02 to 0.5 weight percent, based on the total weight of the flavored article. Alternatively disclosed, the concentration of the at least one additional flavor composition, when added to the flavored article is from 0.03 to 0.5 weight percent, based on the total weight of the flavored article. Alternatively disclosed, the concentration of the at least one additional flavor composition, when added to the flavored article is from 0.04 to 0.5 weight percent, based on the total weight of the flavored article. Alternatively disclosed, the concentration of the at least one additional flavor composition, when added to the flavored article is from 0.05 to 0.5 weight percent, based on the total weight of the flavored article. Alternatively disclosed, the concentration of the at least one additional flavor composition, when added to the flavored article is from 0.06 to 0.5 weight percent, based on the total weight of the flavored article. Alternatively disclosed, the concentration of the at least one additional flavor composition, when added to the flavored article is from 0.07 to 0.5 weight percent, based on the total weight of the flavored article. Alternatively disclosed, the concentration of the at least one additional flavor composition, when added to the flavored article is from 0.09 to 0.5 weight percent, based on the total weight of the flavored article. Alternatively disclosed, the concentration of the at least one additional flavor composition, when added to the flavored article is from 0.09 to 0.5 weight percent, based on the total weight of the flavored article. Alternatively disclosed, the concentration of the at least one additional flavor composition, when added to the flavored article is from 0.1 to 0.5 weight percent, based on the total weight of the flavored article. Alternatively disclosed, the concentration of the at least one additional flavor composition, when added to the flavored article is from 0.15 to 0.5 weight percent, based on the total weight of the flavored article. Alternatively disclosed, the concentration of the at least one additional flavor composition, when added to the flavored article is from 0.2 to 0.5 weight percent, based on the total weight of the flavored article. Alternatively disclosed, the concentration of the at least one additional flavor composition, when added to the flavored article is from 0.25 to 0.5 weight percent, based on the total weight of the flavored article. Alternatively disclosed, the concentration of the at least one additional flavor composition, when added to the flavored article is from 0.3 to 0.5 weight percent, based on the total weight of the flavored article. Alternatively disclosed, the concentration of the at least one additional flavor composition, when added to the flavored article is from 0.35 to 0.5 weight percent, based on the total weight of the flavored article. Alternatively disclosed, the concentration of the at least one additional flavor composition, when added to the flavored article is from 0.4 to 0.5 weight percent, based on the total weight of the flavored article. Alternatively disclosed, the concentration of the at least one additional flavor composition, when added to the flavored article is from 0.45 to 0.5 weight percent, based on the total weight of the flavored article

In some disclosure, the concentration of the at least one additional flavor composition, when added to the flavored article is 0.001, or 0.002, or 0.003, or, 0.004, or 0.005, or 0.006, or 0.007, or 0.008, or 0.009, or 0.01, or 0.02, or 0.03, or, 0.04, or 0.05, or 0.06, or 0.07, or 0.08, or 0.09, or 0.1, or 0.15, or 0.2, or 0.25, or 0.3, or 0.35, or 0.4, or 0.45, or 0.5 weight percent, based on the total weight of the flavored article.

The concentration of the yeast lysate, when added to the flavored article is from 0.0025 to 0.2 weight percent, based on the total weight of the flavored article.

Alternatively, in some embodiments, the concentration of the yeast lysate, when added to the flavored article is from 0.0025 to 0.15 weight percent, based on the total weight of the flavored article. Alternatively, in some embodiments, the concentration of the yeast lysate, when added to the flavored article is from 0.0025 to 0.1 weight percent, based on the total weight of the flavored article. Alternatively, in some embodiments, the concentration of the yeast lysate, when added to the flavored article is from 0.0025 to 0.09 weight percent, based on the total weight of the flavored article. Alternatively, in some embodiments, the concentration of the yeast lysate, when added to the flavored article is from 0.0025 to 0.08 weight percent, based on the total weight of the flavored article. Alternatively, in some embodiments, the concentration of the yeast lysate, when added to the flavored article is from 0.0025 to 0.07 weight percent, based on the total weight of the flavored article. Alternatively, in some embodiments, the concentration of the yeast lysate, when added to the flavored article is from 0.0025 to 0.06 weight percent, based on the total weight of the flavored article. Alternatively, in some embodiments, the concentration of the yeast lysate, when added to the flavored article is from 0.0025 to 0.05 weight percent, based on the total weight of the flavored article. Alternatively, in some embodiments, the concentration of the yeast lysate, when added to the flavored article is from 0.0025 to 0.04 weight percent, based on the total weight of the flavored article. Alternatively, in some embodiments, the concentration of the yeast lysate, when added to the flavored article is from 0.0025 to 0.03 weight percent, based on the total weight of the flavored article. Alternatively, in some embodiments, the concentration of the yeast lysate, when added to the flavored article is from 0.0025 to 0.02 weight percent, based on the total weight of the flavored article. Alternatively, in some embodiments, the concentration of the yeast lysate, when added to the flavored article is from 0.0025 to 0.01 weight percent, based on the total weight of the flavored article. Alternatively, in some embodiments, the concentration of the yeast lysate, when added to the flavored article is from 0.0025 to 0.009 weight percent, based on the total weight of the flavored article. Alternatively, in some embodiments, the concentration of the yeast lysate, when added to the flavored article is from 0.0025 to 0.008 weight percent, based on the total weight of the flavored article. Alternatively, in some embodiments, the concentration of the yeast lysate, when added to the flavored article is from 0.0025 to 0.007 weight percent, based on the total weight of the flavored article. Alternatively, in some embodiments, the concentration of the yeast lysate, when added to the flavored article is from 0.0025 to 0.006 weight percent, based on the total weight of the flavored article. Alternatively, in some embodiments, the concentration of the yeast lysate, when added to the flavored article is from 0.0025 to 0.005 weight percent, based on the total weight of the flavored article. Alternatively, in some embodiments, the concentration of the yeast lysate, when added to the flavored article is from 0.0025 to 0.004 weight percent, based on the total weight of the flavored article. Alternatively, in some embodiments, the concentration of the yeast lysate, when added to the flavored article is from 0.0025 to 0.003 weight percent, based on the total weight of the flavored article.

In some embodiments, the concentration of the yeast lysate, when added to the flavored article is from 0.003 to 0.2 weight percent, based on the total weight of the flavored article. Alternatively, in some embodiments, the concentration of the yeast lysate, when added to the flavored article is from 0.004 to 0.2 weight percent, based on the total weight of the flavored article. Alternatively, in some embodiments, the concentration of the yeast lysate, when added to the flavored article is from 0.005 to 0.2 weight percent, based on the total weight of the flavored article. Alternatively, in some embodiments, the concentration of the yeast lysate, when added to the flavored article is from 0.006 to 0.2 weight percent, based on the total weight of the flavored article. Alternatively, in some embodiments, the concentration of the yeast lysate, when added to the flavored article is from 0.007 to 0.2 weight percent, based on the total weight of the flavored article. Alternatively, in some embodiments, the concentration of the yeast lysate, when added to the flavored article is from 0.008 to 0.2 weight percent, based on the total weight of the flavored article. Alternatively, in some embodiments, the concentration of the yeast lysate, when added to the flavored article is from 0.009 to 0.2 weight percent, based on the total weight of the flavored article. Alternatively, in some embodiments, the concentration of the yeast lysate, when added to the flavored article is from 0.01 to 0.2 weight percent, based on the total weight of the flavored article. Alternatively, in some embodiments, the concentration of the yeast lysate, when added to the flavored article is from 0.02 to 0.2 weight percent, based on the total weight of the flavored article. Alternatively, in some embodiments, the concentration of the yeast lysate, when added to the flavored article is from 0.03 to 0.2 weight percent, based on the total weight of the flavored article. Alternatively, in some embodiments, the concentration of the yeast lysate, when added to the flavored article is from 0.04 to 0.2 weight percent, based on the total weight of the flavored article. Alternatively, in some embodiments, the concentration of the yeast lysate, when added to the flavored article is from 0.05 to 0.2 weight percent, based on the total weight of the flavored article. Alternatively, in some embodiments, the concentration of the yeast lysate, when added to the flavored article is from 0.06 to 0.2 weight percent, based on the total weight of the flavored article. Alternatively, in some embodiments, the concentration of the yeast lysate, when added to the flavored article is from 0.07 to 0.2 weight percent, based on the total weight of the flavored article. Alternatively, in some embodiments, the concentration of the yeast lysate, when added to the flavored article is from 0.09 to 0.2 weight percent, based on the total weight of the flavored article. Alternatively, in some embodiments, the concentration of the yeast lysate, when added to the flavored article is from 0.09 to 0.2 weight percent, based on the total weight of the flavored article. Alternatively, in some embodiments, the concentration of the yeast lysate, when added to the flavored article is from 0.1 to 0.2 weight percent, based on the total weight of the flavored article. Alternatively, in some embodiments, the concentration of the yeast lysate, when added to the flavored article is from 0.15 to 0.2 weight percent, based on the total weight of the flavored article.

In some embodiments, the concentration of the yeast lysate, when added to the flavored article is 0.003, or, 0.004, or 0.005, or 0.006, or 0.007, or 0.008, or 0.009, or 0.01, or 0.02, or 0.03, or, 0.04, or 0.05, or 0.06, or 0.07, or 0.08, or 0.09, or 0.1, or 0.15, or 0.2 weight percent, based on the total weight of the flavored article.

In some embodiments, the composition according to an embodiment presented herein may be employed in either liquid form or dried form. When employed in the latter form, suitable drying means such as spray drying the oil may be used. Alternatively, the composition may be absorbed onto water soluble materials, such as cellulose, starch, sugar, maltodextrin, gum arabic and so forth or may be encapsulated. The actual techniques for preparing such dried forms are well-known.

In some embodiments, the composition according to an embodiment presented herein may be used in many distinct physical forms well- known in the art to provide an initial burst of flavor or a prolonged sensation of flavor. Without being limited thereto, such physical forms include free forms, such as spray dried, powdered, beaded forms, encapsulated forms, and mixtures thereof.

In one embodiment, the composition according to an embodiment presented herein may be in a crystalline, granulated, or powder form.

### Yeast Lysate

In some embodiments, the yeast lysate is a selected from the yeast lysates disclosed in PCT Application Publication No. WO 2003/063613.

In some embodiments, the yeast lysate is a selected from the yeast lysates disclosed in PCT Application Publication No. WO 2003/063614.

In some embodiments, the yeast lysate is a selected from the yeast lysates disclosed in U.S. Patent Application Publication No. US 2010/0183707.

In some embodiments, the yeast lysate is the yeast lysate sold under the tradename MODUMAX by DSM.

### The at Least One Additional Flavor Composition

In some instances, the addition of the at least one additional flavor composition to a yeast lysate modifies at least one of the following sensory traits, when the at least one additional flavor composition is added a flavored article comprising at least one non-animal protein and the yeast lysate: (a) the reduction in the perception of bitterness by a subject; compared to the reduction in the perception of bitterness by a subject when the yeast extract alone is added to the flavored article; (b) the reduction in the perception of astringency by a subject; compared to the reduction in the perception of astringency by a subject when the yeast extract alone is added to the flavored article; (c) the reduction in the perception of green character by a subject; compared to the reduction in the perception of green character by a subject when the yeast extract alone is added to the flavored article; (d) the reduction in the perception of cereal character by a subject; compared to the reduction in the perception of cereal character by a subject when the yeast extract alone is added to the flavored article; (e) the increase in the perception of mouthcoating by a subject; compared to the increase in the perception of mouthcoating by a subject when the yeast extract alone is added to the flavored article; (f) the increase in the perception of cream character by a subject; compared to the increase in the perception of cream character by a subject when the yeast extract alone is added to the flavored article; (g) the increase in the perception of sweetness by a subject; compared to the increase in the perception of sweetness by a subject when the yeast extract alone is added to the flavored article; (h) the increase in the perception of thickness by a subject; compared to the increase in the perception of thickness by a subject when the yeast extract alone is added to the flavored article; or (i) the increase in the perception of vanilla character by a subject; compared to the increase in the perception of vanilla character by a subject when the yeast extract alone is added to the flavored article.

In some embodiments, the at least one additional flavor composition is selected from the group consisting of: (i) a soy masking composition comprising steviol glycosides having additional glucose units added to the base steviol glycoside molecules via enzymatic glucosylation; (ii) a vanilla flavor composition comprising vanillin; (iii) a cream flavor composition comprising lactones; and (iv) combinations thereof.

*The Soy Masking Composition:* In some embodiments, the soy masking composition comprises steviol glycosides having additional glucose units added to the base steviol glycoside molecules via enzymatic glucosylation. In some embodiments, the soy masking composition further comprises salt.

In some embodiments, the soy masking composition comprises 10% w/w or more of steviol glycosides having additional glucose units added to the base steviol glycoside molecules via enzymatic glucosylation.

In some embodiments, the soy masking composition comprises 15% w/w or more of salt.

In some embodiments, the soy masking composition further comprises at least one additional ingredient. Examples of additional ingredients include, but are not limited to vanillin, vanilla extract, lactones (e.g. delta decalactone, gamma decalactone, dodecalactone, or furaneol), and the like.

In some embodiments, the soy masking composition comprising vanillin according to an embodiment presented herein may be employed in either liquid form or dried form. When employed in the latter form, suitable drying means such as spray drying the oil may be used. Alternatively, the composition may be absorbed onto water soluble materials, such as cellulose, starch, sugar, maltodextrin, gum arabic and so forth or may be encapsulated. The actual techniques for preparing such dried forms are well-known.

When employed in liquid form, the soy masking composition comprising vanillin may be diluted in liquid solvents commonly used in flavor industry (such as, for example, propylene glyol, ethanol, triacetine, glycerol, vegetable oils, and the like).

Examples of steviol glycosides having additional glucose units added to the base steviol glycoside molecules via enzymatic glucosylation suitable for use in the compositions, flavored articles and methods described herein include, but are not limited to, the steviol glycosides having additional glucose units added to the base steviol glycoside molecules via enzymatic glucosylation disclosed in U.S. Patent No. 9,107,436.

In some embodiments, the concentration of the soy masking composition, when added to the flavored article is from 0.001 to 0.5 weight percent, based on the total weight of the flavored article. Alternatively, in some embodiments, the concentration of the soy masking composition, when added to the flavored article is from 0.001 to 0.45 weight percent, based on the total weight of the flavored article. Alternatively, in some embodiments, the concentration of the soy masking composition, when added to the flavored article is from 0.001 to 0.4 weight percent, based on the total weight of the flavored article. Alternatively, in some embodiments, the concentration of the soy masking composition, when added to the flavored article is from 0.001 to 0.35 weight percent, based on the total weight of the flavored article. Alternatively, in some embodiments, the concentration of the soy masking composition, when added to the flavored article is from 0.001 to 0.3 weight percent, based on the total weight of the flavored article. Alternatively, in some embodiments, the concentration of the soy masking composition, when added to the flavored article is from 0.001 to 0.25 weight percent, based on the total weight of the flavored article. Alternatively, in some embodiments, the concentration of the soy masking composition, when added to the flavored article is from 0.001 to 0.2 weight percent, based on the total weight of the flavored article. Alternatively, in some embodiments, the concentration of the soy masking composition, when added to the flavored article is from 0.001 to 0.15 weight percent, based on the total weight of the flavored article. Alternatively, in some embodiments, the concentration of the soy masking composition, when added to the flavored article is from 0.001 to 0.1 weight percent, based on the total weight of the flavored article. Alternatively, in some embodiments, the concentration of the soy masking composition, when added to the flavored article is from 0.001 to 0.09 weight percent, based on the total weight of the flavored article. Alternatively, in some embodiments, the concentration of the soy masking composition, when added to the flavored article is from 0.001 to 0.08 weight percent, based on the total weight of the flavored article. Alternatively, in some embodiments, the concentration of the soy masking composition, when added to the flavored article is from 0.001 to 0.07 weight percent, based on the total weight of the flavored article. Alternatively, in some embodiments, the concentration of the soy masking composition, when added to the flavored article is from 0.001 to 0.06 weight percent, based on the total weight of the flavored article. Alternatively, in some embodiments, the concentration of the soy masking composition, when added to the flavored article is from 0.001 to 0.05 weight percent, based on the total weight of the flavored article. Alternatively, in some embodiments, the concentration of the soy masking composition, when added to the flavored article is from 0.001 to 0.04 weight percent, based on the total weight of the flavored article. Alternatively, in some embodiments, the concentration of the soy masking composition, when added to the flavored article is from 0.001 to 0.03 weight percent, based on the total weight of the flavored article. Alternatively, in some embodiments, the concentration of the soy masking composition, when added to the flavored article is from 0.001 to 0.02 weight percent, based on the total weight of the flavored article. Alternatively, in some embodiments, the concentration of the soy masking composition, when added to the flavored article is from 0.001 to 0.01 weight percent, based on the total weight of the flavored article. Alternatively, in some embodiments, the concentration of the soy masking composition, when added to the flavored article is from 0.001 to 0.009 weight percent, based on the total weight of the flavored article. Alternatively, in some embodiments, the concentration of the soy masking composition, when added to the flavored article is from 0.001 to 0.008 weight percent, based on the total weight of the flavored article. Alternatively, in some embodiments, the concentration of the soy masking composition, when added to the flavored article is from 0.001 to 0.007 weight percent, based on the total weight of the flavored article. Alternatively, in some embodiments, the concentration of the soy masking composition, when added to the flavored article is from 0.001 to 0.006 weight percent, based on the total weight of the flavored article. Alternatively, in some embodiments, the concentration of the soy masking composition, when added to the flavored article is from 0.001 to 0.005 weight percent, based on the total weight of the flavored article. Alternatively, in some embodiments, the concentration of the soy masking composition, when added to the flavored article is from 0.001 to 0.004 weight percent, based on the total weight of the flavored article. Alternatively, in some embodiments, the concentration of the soy masking composition, when added to the flavored article is from 0.001 to 0.003 weight percent, based on the total weight of the flavored article. Alternatively, in some embodiments, the concentration of the soy masking composition, when added to the flavored article is from 0.001 to 0.002 weight percent, based on the total weight of the flavored article.

In some embodiments, the concentration of the soy masking composition, when added to the flavored article is from 0.002 to 0.5 weight percent, based on the total weight of the flavored article. Alternatively, in some embodiments, the concentration of the soy masking composition, when added to the flavored article is from 0.003 to 0.5 weight percent, based on the total weight of the flavored article. Alternatively, in some embodiments, the concentration of the soy masking composition, when added to the flavored article is from 0.004 to 0.5 weight percent, based on the total weight of the flavored article. Alternatively, in some embodiments, the concentration of the soy masking composition, when added to the flavored article is from 0.005 to 0.5 weight percent, based on the total weight of the flavored article. Alternatively, in some embodiments, the concentration of the soy masking composition, when added to the flavored article is from 0.006 to 0.5 weight percent, based on the total weight of the flavored article. Alternatively, in some embodiments, the concentration of the soy masking composition, when added to the flavored article is from 0.007 to 0.5 weight percent, based on the total weight of the flavored article. Alternatively, in some embodiments, the concentration of the soy masking composition, when added to the flavored article is from 0.008 to 0.5 weight percent, based on the total weight of the flavored article. Alternatively, in some embodiments, the concentration of the soy masking composition, when added to the flavored article is from 0.009 to 0.5 weight percent, based on the total weight of the flavored article. Alternatively, in some embodiments, the concentration of the soy masking composition, when added to the flavored article is from 0.01 to 0.5 weight percent, based on the total weight of the flavored article. Alternatively, in some embodiments, the concentration of the soy masking composition, when added to the flavored article is from 0.02 to 0.5 weight percent, based on the total weight of the flavored article. Alternatively, in some embodiments, the concentration of the soy masking composition, when added to the flavored article is from 0.03 to 0.5 weight percent, based on the total weight of the flavored article. Alternatively, in some embodiments, the concentration of the soy masking composition, when added to the flavored article is from 0.04 to 0.5 weight percent, based on the total weight of the flavored article. Alternatively, in some embodiments, the concentration of the soy masking composition, when added to the flavored article is from 0.05 to 0.5 weight percent, based on the total weight of the flavored article. Alternatively, in some embodiments, the concentration of the soy masking composition, when added to the flavored article is from 0.06 to 0.5 weight percent, based on the total weight of the flavored article. Alternatively, in some embodiments, the concentration of the soy masking composition, when added to the flavored article is from 0.07 to 0.5 weight percent, based on the total weight of the flavored article. Alternatively, in some embodiments, the concentration of the soy masking composition, when added to the flavored article is from 0.09 to 0.5 weight percent, based on the total weight of the flavored article. Alternatively, in some embodiments, the concentration of the soy masking composition, when added to the flavored article is from 0.09 to 0.5 weight percent, based on the total weight of the flavored article. Alternatively, in some embodiments, the concentration of the soy masking composition, when added to the flavored article is from 0.1 to 0.5 weight percent, based on the total weight of the flavored article. Alternatively, in some embodiments, the concentration of the soy masking composition, when added to the flavored article is from 0.15 to 0.5 weight percent, based on the total weight of the flavored article. Alternatively, in some embodiments, the concentration of the soy masking composition, when added to the flavored article is from 0.2 to 0.5 weight percent, based on the total weight of the flavored article. Alternatively, in some embodiments, the concentration of the soy masking composition, when added to the flavored article is from 0.25 to 0.5 weight percent, based on the total weight of the flavored article. Alternatively, in some embodiments, the concentration of the soy masking composition, when added to the flavored article is from 0.3 to 0.5 weight percent, based on the total weight of the flavored article. Alternatively, in some embodiments, the concentration of the soy masking composition, when added to the flavored article is from 0.35 to 0.5 weight percent, based on the total weight of the flavored article. Alternatively, in some embodiments, the concentration of the soy masking composition, when added to the flavored article is from 0.4 to 0.5 weight percent, based on the total weight of the flavored article. Alternatively, in some embodiments, the concentration of the soy masking composition, when added to the flavored article is from 0.45 to 0.5 weight percent, based on the total weight of the flavored article.

In some embodiments, the concentration of the soy masking composition, when added to the flavored article is 0.001, or 0.002, or 0.003, or, 0.004, or 0.005, or 0.006, or 0.007, or 0.008, or 0.009, or 0.01, or 0.02, or 0.03, or, 0.04, or 0.05, or 0.06, or 0.07, or 0.08, or 0.09, or 0.1, or 0.15, or 0.2, or 0.25, or 0.3, or 0.35, or 0.4, or 0.45, or 0.5 weight percent, based on the total weight of the flavored article.

In some embodiments, the concentration of the soy masking composition, when added to the flavored article is 0.05 weight percent, based on the total weight of the flavored article.

Thus, in some embodiments, the compositions set forth in any of the foregoing aspects (including in any uses or methods), further comprise a sweetener. In some embodiments, the composition further comprises a vehicle. In some embodiments, the vehicle is water. In some embodiments, the flavor-modifying compound is present at a concentration at or below its sweetness recognition threshold.

For example, in some embodiments, the sweetener (according to any of the embodiments set forth above) is present in an amount from about 0.1% to about 12% by weight. In some embodiments, the sweetener is present in an amount from about 0.2% to about 10% by weight. In some embodiments, the sweetener is present in an amount from about 0.3% to about 8% by weight. In some embodiments, the sweetener is present in an amount from about 0.4% to about 6% by weight. In some embodiments, the sweetener is present in an amount from about 0.5% to about 5% by weight. In some embodiments, the sweetener is present in an amount from about 1% to about 2% by weight. In some embodiments, the sweetener is present in an amount from about 0.1% to about 5% by weight. In some embodiments, the sweetener is present in an amount from about 0.1% to about 4% by weight. In some embodiments, the sweetener is present in an amount from about 0.1% to about 3% by weight. In some embodiments, the sweetener is present in an amount from about 0.1% to about 2% by weight. In some embodiments, the sweetener is present in an amount from about 0.1% to about 1% by weight. In some embodiments, the sweetener is present in an amount from about 0.1% to about 0.5% by weight. In some embodiments, the sweetener is present in an amount from about 0.5% to about 10% by weight. In some embodiments, the sweetener is present in an amount from about 2% to about 8% by weight. In some further embodiments of the embodiments set forth in this paragraph, the sweetener is sucrose, fructose, glucose, xylitol, erythritol, or combinations thereof.

In some other embodiments, the sweetener is present in an amount from 10 ppm to 1000 ppm. In some embodiments, the sweetener is present in an amount from 20 ppm to 800 ppm. In some embodiments, the sweetener is present in an amount from 30 ppm to 600 ppm. In some embodiments, the sweetener is present in an amount from 40 ppm to 500 ppm. In some embodiments, the sweetener is present in an amount from 50 ppm to 400 ppm. In some embodiments, the sweetener is present in an amount from 50 ppm to 300 ppm. In some embodiments, the sweetener is present in an amount from 50 ppm to 200 ppm. In some embodiments, the sweetener is present in an amount from 50 ppm to 150 ppm. In some further embodiments of the embodiments set forth in this paragraph, the sweetener is a steviol glycoside, a mogroside, a derivative of either of the foregoing, such as glycoside derivatives (e.g., glucosylates), or any combination thereof.

The compositions can include any suitable sweeteners or combination of sweeteners. In some embodiments, the sweetener is a common saccharide sweeteners, such as sucrose, fructose, glucose, and sweetener compositions comprising natural sugars, such as corn syrup (including high fructose corn syrup) or other syrups or sweetener concentrates derived from natural fruit and vegetable sources. In some embodiments, the sweetener is sucrose, fructose, or a combination thereof. In some embodiments, the sweetener is sucrose. In some other embodiments, the sweetener is selected from rare natural sugars including D-allose, D-psicose, L-ribose, D-tagatose, L-glucose, L-fucose, L-arbinose, D-turanose, and D-leucrose. In some embodiments, the sweetener is selected from semi-synthetic "sugar alcohol" sweeteners such as erythritol, isomalt, lactitol, mannitol, sorbitol, xylitol, maltodextrin, and the like. In some embodiments, the sweetener is selected from artificial sweeteners such as aspartame, saccharin, acesulfame-K, cyclamate, sucralose, and alitame. In some embodiments, the sweetener is selected from the group consisting of cyclamic acid, mogroside, tagatose, maltose, galactose, mannose, sucrose, fructose, lactose, allulose, neotame and other aspartame derivatives, glucose, D-tryptophan, glycine, maltitol, lactitol, isomalt, hydrogenated glucose syrup (HGS), hydrogenated starch hydrolyzate (HSH), stevioside, rebaudioside A, other sweet Stevia-based glycosides, chemically modified steviol glycosides (such as glucosylated steviol glycosides), mogrosides, chemically modified mogrosides (such as glucosylated mogrosides), carrelame and other guanidine-based sweeteners. In some embodiments, the sweetener is a combination of two or more of the sweeteners set forth in this paragraph. In some embodiments, the sweetener may combinations of two, three, four or five sweeteners as disclosed herein. In some embodiments, the sweetener may be a sugar. In some embodiments, the sweetener may be a combination of one or more sugars and other natural and artificial sweeteners. In some embodiments, the sweetener is a sugar. In some embodiments, the sugar is cane sugar. In some embodiments, the sugar is beet sugar. In some embodiments, the sugar may be sucrose, fructose, glucose or combinations thereof. In some embodiments, the sugar may be sucrose. In some embodiments, the sugar may be a combination of fructose and glucose.

The sweetener can also include, for example, sweetener compositions comprising one or more natural or synthetic carbohydrate, such as corn syrup, high fructose corn syrup, high maltose corn syrup, glucose syrup, sucralose syrup, hydrogenated glucose syrup (HGS), hydrogenated starch hydrolyzate (HSH), or other syrups or sweetener concentrates derived from natural fruit and vegetable sources, or semi-synthetic "sugar alcohol" sweeteners such as polyols. Non-limiting examples of polyols in some embodiments include erythritol, maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentio-oligosaccharides, reduced maltose syrup, reduced glucose syrup, isomaltulose, maltodextrin, and the like, and sugar alcohols or any other carbohydrates or combinations thereof capable of being reduced which do not adversely affect taste.

The sweetener may be a natural or synthetic sweetener that includes, but is not limited to, agave inulin, agave nectar, agave syrup, amazake, brazzein, brown rice syrup, coconut crystals, coconut sugars, coconut syrup, date sugar, fructans (also referred to as inulin fiber, fructo-oligosaccharides, or oligo-fructose), green stevia powder, stevia rebaudiana, rebaudioside A, rebaudioside B, rebaudioside C, rebaudioside D, rebaudioside E, rebaudioside F, rebaudioside I, rebaudioside H, rebaudioside L, rebaudioside K, rebaudioside J, rebaudioside N, rebaudioside O, rebaudioside M and other sweet stevia-based glycosides, stevioside, stevioside extracts, honey, Jerusalem artichoke syrup, licorice root, luo han guo (fruit, powder, or extracts), lucuma (fruit, powder, or extracts), maple sap (including, for example, sap extracted from *Acer saccharum, Acer nigrum, Acer rubrum, Acer saccharinum, Acer platanoides, Acer negundo, Acer macrophyllum, Acer grandidentatum, Acer glabrum, Acer mono*), maple syrup, maple sugar, walnut sap (including, for example, sap extracted from *Juglans cinerea, Juglans nigra, Juglans ailatifolia, Juglans regia*), birch sap (including, for example, sap extracted from *Betula papyrifera, Betula alleghaniensis, Betula lenta, Betula nigra, Betula populifolia, Betula pendula*), sycamore sap (such as, for example, sap extracted from *Platanus occidentalis*), ironwood sap (such as, for example, sap extracted from *Ostrya virginiana*), mascobado, molasses (such as, for example, blackstrap molasses), molasses sugar, monatin, monellin, cane sugar (also referred to as natural sugar, unrefined cane sugar, or sucrose), palm sugar, panocha, piloncillo, rapadura, raw sugar, rice syrup, sorghum, sorghum syrup, cassava syrup (also referred to as tapioca syrup), thaumatin, yacon root, malt syrup, barley malt syrup, barley malt powder, beet sugar, cane sugar, crystalline juice crystals, caramel, carbitol, carob syrup, castor sugar, hydrogenated starch hydrolates, hydrolyzed can juice, hydrolyzed starch, invert sugar, anethole, arabinogalactan, arrope, syrup, P-4000, acesulfame potassium (also referred to as acesulfame K or ace-K), alitame (also referred to as aclame), advantame, aspartame, baiyunoside, neotame, benzamide derivatives, bernadame, canderel, carrelame and other guanidine-based sweeteners, vegetable fiber, corn sugar, coupling sugars, curculin, cyclamates, cyclocarioside I, demerara, dextran, dextrin, diastatic malt, dulcin, sucrol, valzin, dulcoside A, dulcoside B, emulin, enoxolone, maltodextrin, saccharin, estragole, ethyl maltol, glucin, gluconic acid, glucono-lactone, glucosamine, glucoronic acid, glycerol, glycine, glycyphillin, glycyrrhizin, glycyrrhetic acid monoglucuronide, golden sugar, yellow sugar, golden syrup, granulated sugar, gynostemma, hernandulcin, isomerized liquid sugars, jallab, chicory root dietary fiber, kynurenine derivatives (including N'-formyl-kynurenine, N'-acetyl-kynurenine, 6-chloro-kynurenine), galactitol, litesse, ligicane, lycasin, lugduname, guanidine, falernum, mabinlin I, mabinlin II, maltol, maltisorb, maltodextrin, maltotriol, mannosamine, miraculin, mizuame, mogrosides (including, for example, mogroside IV, mogroside V, and neomogroside), mukurozioside, nano sugar, naringin dihydrochalcone, neohesperidine dihydrochalcone, nib sugar, nigero-oligosaccharide, norbu, orgeat syrup, osladin, pekmez, pentadin, periandrin I, perillaldehyde, perillartine, petphyllum, phenylalanine, phlomisoside I, phlorodizin, phyllodulcin, polyglycitol syrups, polypodoside A, pterocaryoside A, pterocaryoside B, rebiana, refiners syrup, rub syrup, rubusoside, selligueain A, shugr, siamenoside I, siraitia grosvenorii, soybean oligosaccharide, Splenda, SRI oxime V, steviol glycoside, steviolbioside, stevioside, strogins 1, 2, and 4, sucronic acid, sucrononate, sugar, suosan, phloridzin, superaspartame, tetrasaccharide, threitol, treacle, trilobtain, tryptophan and derivatives (6-trifluoromethyl-tryptophan, 6-chloro-D-tryptophan), vanilla sugar, volemitol, birch syrup, aspartame-acesulfame, assugrin, and combinations or blends of any two or more thereof.

In still other embodiments, the sweetener can be a chemically or enzymatically modified natural high potency sweetener. Modified natural high potency sweeteners include glycosylated natural high potency sweetener such as glucosyl-, galactosyl-, or fructosyl-derivatives containing 1-50 glycosidic residues. Glycosylated natural high potency sweeteners may be prepared by enzymatic transglycosylation reaction catalyzed by various enzymes possessing transglycosylating activity. In some embodiments, the modified sweetener can be substituted or unsubstituted.

Additional sweeteners also include combinations of any two or more of any of the aforementioned sweeteners. In some embodiments, the sweetener may comprise combinations of two, three, four or five sweeteners as disclosed herein. In some embodiments, the sweetener may be a sugar. In some embodiments, the sweetener may be a combination of one or more sugars and other natural and artificial sweeteners. In some embodiments, the sweetener is a caloric sweetener, such as sucrose, fructose, xylitol, erythritol, or combinations thereof. In some embodiments, the ingestible compositions are free (or, in some embodiments) substantially free of stevia-derived sweeteners, such as steviol glycosides, glucosylated steviol glycosides, or rebaudiosides. For example, in some embodiments, the ingestible compositions are either free of stevia-derived sweeteners or comprise stevia-derived sweeteners in a concentration of no more than 1000 ppm, or no more than 500 ppm, or no more than 200 ppm, or no more than 100 ppm, or no more than 50 ppm, or no more than 20 ppm, or no more than 10 ppm, or no more than 5 ppm, or no more than 3 ppm, or no more than 1 ppm.

The compositions disclosed herein can, in certain embodiments, comprise any additional ingredients or combination of ingredients as are commonly used in food and beverage products, including, but not limited to:
acids, including, for example citric acid, phosphoric acid, ascorbic acid, sodium acid sulfate, lactic acid, or tartaric acid;
bitter ingredients, including, for example caffeine, quinine, green tea, catechins, polyphenols, green robusta coffee extract, green coffee extract, potassium chloride, menthol, or proteins (such as proteins and protein isolates derived from plants, algae, or fungi);
coloring agents, including, for example caramel color, Red #40, Yellow #5, Yellow #6, Blue #1, Red #3, purple carrot, black carrot juice, purple sweet potato, vegetable juice, fruit juice, beta carotene, turmeric curcumin, or titanium dioxide;
preservatives, including, for example sodium benzoate, potassium benzoate, potassium sorbate, sodium metabisulfate, sorbic acid, or benzoic acid;
antioxidants including, for example ascorbic acid, calcium disodium EDTA, alpha tocopherols, mixed tocopherols, rosemary extract, grape seed extract, resveratrol, or sodium hexametaphosphate;
vitamins or functional ingredients including, for example resveratrol, Co-Q10, omega 3 fatty acids, theanine, choline chloride (citocoline), fibersol, inulin (chicory root), taurine, panax ginseng extract, guanana extract, ginger extract, L-phenylalanine, L-carnitine, L-tartrate, D-glucoronolactone, inositol, bioflavonoids, Echinacea, ginko biloba, yerba mate, flax seed oil, garcinia cambogia rind extract, white tea extract, ribose, milk thistle extract, grape seed extract, pyrodixine HCl (vitamin B6), cyanoobalamin (vitamin B12), niacinamide (vitamin B3), biotin, calcium lactate, calcium pantothenate (pantothenic acid), calcium phosphate, calcium carbonate, chromium chloride, chromium polynicotinate, cupric sulfate, folic acid, ferric pyrophosphate, iron, magnesium lactate, magnesium carbonate, magnesium sulfate, monopotassium phosphate, monosodium phosphate, phosphorus, potassium iodide, potassium phosphate, riboflavin, sodium sulfate, sodium gluconate, sodium polyphosphate, sodium bicarbonate, thiamine mononitrate, vitamin D3, vitamin A palmitate, zinc gluconate, zinc lactate, or zinc sulphate;
clouding agents, including, for example ester gun, brominated vegetable oil (BVO), or sucrose acetate isobutyrate (SAIB);
buffers, including, for example sodium citrate, potassium citrate, or salt;
flavors, including, for example propylene glycol, ethyl alcohol, glycerine, gum Arabic (gum acacia), maltodextrin, modified corn starch, dextrose, natural flavor, natural flavor with other natural flavors (natural flavor WONF), natural and artificial flavors, artificial flavor, silicon dioxide, magnesium carbonate, or tricalcium phosphate; or
starches and stabilizers, including, for example pectin, xanthan gum, carboxylmethylcellulose (CMC), polysorbate 60, polysorbate 80, medium chain triglycerides, cellulose gel, cellulose gum, sodium caseinate, modified food starch, gum Arabic (gum acacia), inulin, or carrageenan.

The compositions disclosed herein can have any suitable pH. In some embodiments, the pH ranges from lower pH to neutral pH. The lower and neutral pH includes, but is not limited to, a pH from 1.5 to 9.0, or from 2.5 to 8.5; from 3.0 to 8.0; from 3.5 to 7.5; and from 4.0 to 7.

The compositions set forth according to any of the foregoing embodiments, also include, in certain embodiments, one or more additional flavor-modifying compounds, such as compounds that enhance sweetness (e.g., hesperetin, naringenin, glucosylated steviol glycosides, etc.), compounds that block bitterness, compounds that enhance umami, compounds that reduce sourness or licorice taste, compounds that enhance saltiness, compounds that enhance a cooling effect, or any combinations of the foregoing.

Thus, in some embodiments, compositions disclosed herein comprise one or more sweetness enhancing compounds. Such sweetness enhancing compounds include, but are not limited to, naturally derived compounds, such as hesperitin, naringenin, glucosylated steviol glycosides, or synthetic compounds, such as any compounds set forth in U.S. Patent Nos. 8,541,421; 8,815,956; 9,834,544; 8,592,592; 8,877,922; 9,000,054; and 9,000,051, as well as U.S. Patent Application Publication No. 2017/0119032. In some embodiments of any of the preceding embodiments, the compositions comprise glucosylated steviol glycosides. As used herein, the term "glucosylated steviol glycoside" refers to the product of enzymatically glucosylating natural steviol glycoside compounds. The glucosylation generally occurs through a glycosidic bond, such as an α-1,2 bond, an α-1,4 bond, an α-1.6 bond, a β-1,2 bond, a β-1,4 bond, a β-1,6 bond, and so forth. In some embodiments of any of the preceding embodiments, the compositions comprise 3-((4-amino-2,2-dioxo-1*H*-benzo[*c*][1,2,6]-thiadiazin-5-yl)oxy)-2,2-dimethyl-*N*-propyl-propanamide, *N*-(1-((4-amino-2,2-dioxo-1*H-*benzo[c][1,2,6]thiadiazin-5-yl)oxy)-2-methyl-propan-2-yl)isonicotinamide, or any combination thereof.

In some further embodiments, the compositions disclosed herein comprise one or more other umami or kokumi enhancing compounds. Such umami or kokumi enhancing compounds include, but are not limited to, naturally derived compounds, such as ericamide, or synthetic compounds, such as any compounds set forth in U.S. Patent Nos. 8,735,081; 8,124,121; and 8,968,708.

In some further embodiments, the compositions disclosed herein comprise one or more cooling enhancing compounds. Such cooling enhancing compounds include, but are not limited to, naturally derived compounds, such as menthol or analogs thereof, or synthetic compounds, such as any compounds set forth in U.S. Patent Nos. 9,394,287 and 10,421,727.

In some further embodiments, the compositions disclosed herein comprise one or more bitterness blocking compounds. Such bitterness blocking compounds include, but are not limited to, naturally derived compounds, such as menthol or analogs thereof, or synthetic compounds, such as any compounds set forth in U.S. Patent Nos. 8,076,491; 8,445,692; and 9,247,759.

In some further embodiments, compositions disclosed herein comprise one or more sour taste modulating compounds.

In some further embodiments, the compositions disclosed herein comprise one or more mouthfeel modifying compounds. Such mouthfeel modifying compounds include, but are not limited to, tannins, cellulosic materials, bamboo powder, and the like.

In some further embodiments, the compositions disclosed herein comprise one or more flavor masking compounds. Such flavor masking compounds include, but are not limited to, cellulosic materials, materials extracted from fungus, materials extracted from plants, citric acid, carbonic acid (or carbonates), and the like.

### The Vanilla Flavor Composition:

The vanilla flavor composition comprises vanillin. As used herein, the term "vanilla flavor" refers to mixtures of vanillin, and eventually vanilla extracts or aromatic components (in the form of pure compounds or natural extracts or flavoring preparations) that impart a typical vanilla flavor to flavored articles.

In some embodiments, the vanilla flavor composition comprises 6% w/w or more of vanillin.

In some embodiments, the vanilla flavor composition comprising vanillin further comprises at least one additional ingredient. Examples of additional ingredients include, but are not limited to acids (e.g. vanillic acid, 4 hydroxy benzoic acid), aldehydes (e.g. 4-hydroxy-benzaldehyde, 4-methoxy-benzaldehyde), alcohols (e.g. 4-methoxy benzenemethanol), ketones (e.g. 2,3-pentandione), lactones (e.g. 2(3H)-Furanone, 5-hexyldihydro-), phenols (e.g. 2-methoxy-phenol, 4-vinyl-guaiacol, 2-methoxy-4-methyl phenol, 4-vinyl phenol ), esters, sulfur compounds, pyrazines, and the like.

In some embodiments, the vanilla flavor composition comprising vanillin according to an embodiment presented herein may be employed in either liquid form or dried form. When employed in the latter form, suitable drying means such as spray drying the oil may be used. Alternatively, the composition may be absorbed onto water soluble materials, such as cellulose, starch, sugar, maltodextrin, gum arabic and so forth or may be encapsulated. The actual techniques for preparing such dried forms are well-known.

When employed in liquid form, the vanilla flavor composition comprising vanillin may be diluted in liquid solvents commonly used in flavor industry (such as, for example, propylene glyol, ethanol, triacetine, glycerol, vegetable oils, and the like).

Examples of a vanilla flavor composition comprising vanillin suitable for use in the various embodiments presented herein are the compositions disclosed in Torrone (Speziale et al; International Journal of Food Science and Technology; 2010; 45; 1586-1593).

In some embodiments, the concentration of the vanilla flavor composition, when added to the flavored article is from 0.001 to 0.5 weight percent, based on the total weight of the flavored article. Alternatively, in some embodiments, the concentration of the vanilla flavor composition, when added to the flavored article is from 0.001 to 0.45 weight percent, based on the total weight of the flavored article. Alternatively, in some embodiments, the concentration of the vanilla flavor composition, when added to the flavored article is from 0.001 to 0.4 weight percent, based on the total weight of the flavored article. Alternatively, in some embodiments, the concentration of the vanilla flavor composition, when added to the flavored article is from 0.001 to 0.35 weight percent, based on the total weight of the flavored article. Alternatively, in some embodiments, the concentration of the vanilla flavor composition, when added to the flavored article is from 0.001 to 0.3 weight percent, based on the total weight of the flavored article. Alternatively, in some embodiments, the concentration of the vanilla flavor composition, when added to the flavored article is from 0.001 to 0.25 weight percent, based on the total weight of the flavored article. Alternatively, in some embodiments, the concentration of the vanilla flavor composition, when added to the flavored article is from 0.001 to 0.2 weight percent, based on the total weight of the flavored article. Alternatively, in some embodiments, the concentration of the vanilla flavor composition, when added to the flavored article is from 0.001 to 0.15 weight percent, based on the total weight of the flavored article. Alternatively, in some embodiments, the concentration of the vanilla flavor composition, when added to the flavored article is from 0.001 to 0.1 weight percent, based on the total weight of the flavored article. Alternatively, in some embodiments, the concentration of the vanilla flavor composition, when added to the flavored article is from 0.001 to 0.09 weight percent, based on the total weight of the flavored article. Alternatively, in some embodiments, the concentration of the vanilla flavor composition, when added to the flavored article is from 0.001 to 0.08 weight percent, based on the total weight of the flavored article. Alternatively, in some embodiments, the concentration of the vanilla flavor composition, when added to the flavored article is from 0.001 to 0.07 weight percent, based on the total weight of the flavored article. Alternatively, in some embodiments, the concentration of the vanilla flavor composition, when added to the flavored article is from 0.001 to 0.06 weight percent, based on the total weight of the flavored article. Alternatively, in some embodiments, the concentration of the vanilla flavor composition, when added to the flavored article is from 0.001 to 0.05 weight percent, based on the total weight of the flavored article. Alternatively, in some embodiments, the concentration of the vanilla flavor composition, when added to the flavored article is from 0.001 to 0.04 weight percent, based on the total weight of the flavored article. Alternatively, in some embodiments, the concentration of the vanilla flavor composition, when added to the flavored article is from 0.001 to 0.03 weight percent, based on the total weight of the flavored article. Alternatively, in some embodiments, the concentration of the vanilla flavor composition, when added to the flavored article is from 0.001 to 0.02 weight percent, based on the total weight of the flavored article. Alternatively, in some embodiments, the concentration of the vanilla flavor composition, when added to the flavored article is from 0.001 to 0.01 weight percent, based on the total weight of the flavored article. Alternatively, in some embodiments, the concentration of the vanilla flavor composition, when added to the flavored article is from 0.001 to 0.009 weight percent, based on the total weight of the flavored article. Alternatively, in some embodiments, the concentration of the vanilla flavor composition, when added to the flavored article is from 0.001 to 0.008 weight percent, based on the total weight of the flavored article. Alternatively, in some embodiments, the concentration of the vanilla flavor composition, when added to the flavored article is from 0.001 to 0.007 weight percent, based on the total weight of the flavored article. Alternatively, in some embodiments, the concentration of the vanilla flavor composition, when added to the flavored article is from 0.001 to 0.006 weight percent, based on the total weight of the flavored article. Alternatively, in some embodiments, the concentration of the vanilla flavor composition, when added to the flavored article is from 0.001 to 0.005 weight percent, based on the total weight of the flavored article. Alternatively, in some embodiments, the concentration of the vanilla flavor composition, when added to the flavored article is from 0.001 to 0.004 weight percent, based on the total weight of the flavored article. Alternatively, in some embodiments, the concentration of the vanilla flavor composition, when added to the flavored article is from 0.001 to 0.003 weight percent, based on the total weight of the flavored article. Alternatively, in some embodiments, the concentration of the vanilla flavor composition, when added to the flavored article is from 0.001 to 0.002 weight percent, based on the total weight of the flavored article.

In some embodiments, the concentration of the vanilla flavor composition, when added to the flavored article is from 0.002 to 0.5 weight percent, based on the total weight of the flavored article. Alternatively, in some embodiments, the concentration of the vanilla flavor composition, when added to the flavored article is from 0.003 to 0.5 weight percent, based on the total weight of the flavored article. Alternatively, in some embodiments, the concentration of the vanilla flavor composition, when added to the flavored article is from 0.004 to 0.5 weight percent, based on the total weight of the flavored article. Alternatively, in some embodiments, the concentration of the vanilla flavor composition, when added to the flavored article is from 0.005 to 0.5 weight percent, based on the total weight of the flavored article. Alternatively, in some embodiments, the concentration of the vanilla flavor composition, when added to the flavored article is from 0.006 to 0.5 weight percent, based on the total weight of the flavored article. Alternatively, in some embodiments, the concentration of the vanilla flavor composition, when added to the flavored article is from 0.007 to 0.5 weight percent, based on the total weight of the flavored article. Alternatively, in some embodiments, the concentration of the vanilla flavor composition, when added to the flavored article is from 0.008 to 0.5 weight percent, based on the total weight of the flavored article. Alternatively, in some embodiments, the concentration of the vanilla flavor composition, when added to the flavored article is from 0.009 to 0.5 weight percent, based on the total weight of the flavored article. Alternatively, in some embodiments, the concentration of the vanilla flavor composition, when added to the flavored article is from 0.01 to 0.5 weight percent, based on the total weight of the flavored article. Alternatively, in some embodiments, the concentration of the vanilla flavor composition, when added to the flavored article is from 0.02 to 0.5 weight percent, based on the total weight of the flavored article. Alternatively, in some embodiments, the concentration of the vanilla flavor composition, when added to the flavored article is from 0.03 to 0.5 weight percent, based on the total weight of the flavored article. Alternatively, in some embodiments, the concentration of the vanilla flavor composition, when added to the flavored article is from 0.04 to 0.5 weight percent, based on the total weight of the flavored article. Alternatively, in some embodiments, the concentration of the vanilla flavor composition, when added to the flavored article is from 0.05 to 0.5 weight percent, based on the total weight of the flavored article. Alternatively, in some embodiments, the concentration of the vanilla flavor composition, when added to the flavored article is from 0.06 to 0.5 weight percent, based on the total weight of the flavored article. Alternatively, in some embodiments, the concentration of the vanilla flavor composition, when added to the flavored article is from 0.07 to 0.5 weight percent, based on the total weight of the flavored article. Alternatively, in some embodiments, the concentration of the vanilla flavor composition, when added to the flavored article is from 0.09 to 0.5 weight percent, based on the total weight of the flavored article. Alternatively, in some embodiments, the concentration of the vanilla flavor composition, when added to the flavored article is from 0.09 to 0.5 weight percent, based on the total weight of the flavored article. Alternatively, in some embodiments, the concentration of the vanilla flavor composition, when added to the flavored article is from 0.1 to 0.5 weight percent, based on the total weight of the flavored article. Alternatively, in some embodiments, the concentration of the vanilla flavor composition, when added to the flavored article is from 0.15 to 0.5 weight percent, based on the total weight of the flavored article. Alternatively, in some embodiments, the concentration of the vanilla flavor composition, when added to the flavored article is from 0.2 to 0.5 weight percent, based on the total weight of the flavored article. Alternatively, in some embodiments, the concentration of the vanilla flavor composition, when added to the flavored article is from 0.25 to 0.5 weight percent, based on the total weight of the flavored article. Alternatively, in some embodiments, the concentration of the vanilla flavor composition, when added to the flavored article is from 0.3 to 0.5 weight percent, based on the total weight of the flavored article. Alternatively, in some embodiments, the concentration of the vanilla flavor composition, when added to the flavored article is from 0.35 to 0.5 weight percent, based on the total weight of the flavored article. Alternatively, in some embodiments, the concentration of the vanilla flavor composition, when added to the flavored article is from 0.4 to 0.5 weight percent, based on the total weight of the flavored article. Alternatively, in some embodiments, the concentration of the vanilla flavor composition, when added to the flavored article is from 0.45 to 0.5 weight percent, based on the total weight of the flavored article.

In some embodiments, the concentration of the vanilla flavor composition, when added to the flavored article is 0.001, or 0.002, or 0.003, or, 0.004, or 0.005, or 0.006, or 0.007, or 0.008, or 0.009, or 0.01, or 0.02, or 0.03, or, 0.04, or 0.05, or 0.06, or 0.07, or 0.08, or 0.09, or 0.1, or 0.15, or 0.2, or 0.25, or 0.3, or 0.35, or 0.4, or 0.45, or 0.5 weight percent, based on the total weight of the flavored article.

In some embodiments, the concentration of the vanilla flavor composition, when added to the flavored article is 0.06 weight percent, based on the total weight of the flavored article.

### The Cream Flavor Composition:

The cream flavor composition comprises lactones. As used herein, the term "cream flavor" refers mixtures of extracts or aromatic components (in the form of pure compounds or natural extracts or flavoring preparations) imparting a typical dairy cream flavor to flavored articles.

In some embodiments, the cream flavor composition comprises 1% w/w or more of lactones. Suitable lactones include delta decalactone, gamma decalactone, dodecalactone, or furaneol, and the like.

In some embodiments, the cream flavor composition further comprises at least one additional ingredient. Examples of additional ingredients include, but are not limited to acids (e.g. butanoic acid), aldehydes (e.g. acetaldehyde, benzaldehyde, 4-methoxy-), ketones (e.g. 2,3-pentanedione, 2-octanone), lactones(e.g. (2(3H)-Furanone, 5-hexyldihydro-, 2H-Pyran-2-one, tetrahydro-6-pentyl-), phenols (e.g. -methoxy-phenol, 4-vinyl-guaiacol, 2-methoxy-4-methyl phenol, 4-vinyl phenol), sulfur compounds (e.g. methane, thiobis-, 5-thiazoleethanol, 4-methyl-), alcohols, esters, pyrazines, and the like.

In some embodiments, the cream flavor composition according to an embodiment presented herein may be employed in either liquid form or dried form. When employed in the latter form, suitable drying means such as spray drying the oil may be used. Alternatively, the composition may be absorbed onto water soluble materials, such as cellulose, starch, sugar, maltodextrin, gum arabic and so forth or may be encapsulated. The actual techniques for preparing such dried forms are well-known.

When employed in liquid form, the cream flavor composition may be diluted in liquid solvents commonly used in flavor industry (such as, for example, propylene glyol, ethanol, triacetine, glycerol, vegetable oils, and the like).

In some embodiments, the concentration of the cream flavor composition, when added to the flavored article is from 0.001 to 0.5 weight percent, based on the total weight of the flavored article. Alternatively, in some embodiments, the concentration of the cream flavor composition, when added to the flavored article is from 0.001 to 0.45 weight percent, based on the total weight of the flavored article. Alternatively, in some embodiments, the concentration of the cream flavor composition, when added to the flavored article is from 0.001 to 0.4 weight percent, based on the total weight of the flavored article. Alternatively, in some embodiments, the concentration of the cream flavor composition, when added to the flavored article is from 0.001 to 0.35 weight percent, based on the total weight of the flavored article. Alternatively, in some embodiments, the concentration of the cream flavor composition, when added to the flavored article is from 0.001 to 0.3 weight percent, based on the total weight of the flavored article. Alternatively, in some embodiments, the concentration of the cream flavor composition, when added to the flavored article is from 0.001 to 0.25 weight percent, based on the total weight of the flavored article. Alternatively, in some embodiments, the concentration of the cream flavor composition, when added to the flavored article is from 0.001 to 0.2 weight percent, based on the total weight of the flavored article. Alternatively, in some embodiments, the concentration of the cream flavor composition, when added to the flavored article is from 0.001 to 0.15 weight percent, based on the total weight of the flavored article. Alternatively, in some embodiments, the concentration of the cream flavor composition, when added to the flavored article is from 0.001 to 0.1 weight percent, based on the total weight of the flavored article. Alternatively, in some embodiments, the concentration of the cream flavor composition, when added to the flavored article is from 0.001 to 0.09 weight percent, based on the total weight of the flavored article. Alternatively, in some embodiments, the concentration of the cream flavor composition, when added to the flavored article is from 0.001 to 0.08 weight percent, based on the total weight of the flavored article. Alternatively, in some embodiments, the concentration of the cream flavor composition, when added to the flavored article is from 0.001 to 0.07 weight percent, based on the total weight of the flavored article. Alternatively, in some embodiments, the concentration of the cream flavor composition, when added to the flavored article is from 0.001 to 0.06 weight percent, based on the total weight of the flavored article. Alternatively, in some embodiments, the concentration of the cream flavor composition, when added to the flavored article is from 0.001 to 0.05 weight percent, based on the total weight of the flavored article. Alternatively, in some embodiments, the concentration of the cream flavor composition, when added to the flavored article is from 0.001 to 0.04 weight percent, based on the total weight of the flavored article. Alternatively, in some embodiments, the concentration of the cream flavor composition, when added to the flavored article is from 0.001 to 0.03 weight percent, based on the total weight of the flavored article. Alternatively, in some embodiments, the concentration of the cream flavor composition, when added to the flavored article is from 0.001 to 0.02 weight percent, based on the total weight of the flavored article. Alternatively, in some embodiments, the concentration of the cream flavor composition, when added to the flavored article is from 0.001 to 0.01 weight percent, based on the total weight of the flavored article. Alternatively, in some embodiments, the concentration of the cream flavor composition, when added to the flavored article is from 0.001 to 0.009 weight percent, based on the total weight of the flavored article. Alternatively, in some embodiments, the concentration of the cream flavor composition, when added to the flavored article is from 0.001 to 0.008 weight percent, based on the total weight of the flavored article. Alternatively, in some embodiments, the concentration of the cream flavor composition, when added to the flavored article is from 0.001 to 0.007 weight percent, based on the total weight of the flavored article. Alternatively, in some embodiments, the concentration of the cream flavor composition, when added to the flavored article is from 0.001 to 0.006 weight percent, based on the total weight of the flavored article. Alternatively, in some embodiments, the concentration of the cream flavor composition, when added to the flavored article is from 0.001 to 0.005 weight percent, based on the total weight of the flavored article. Alternatively, in some embodiments, the concentration of the cream flavor composition, when added to the flavored article is from 0.001 to 0.004 weight percent, based on the total weight of the flavored article. Alternatively, in some embodiments, the concentration of the cream flavor composition, when added to the flavored article is from 0.001 to 0.003 weight percent, based on the total weight of the flavored article. Alternatively, in some embodiments, the concentration of the cream flavor composition, when added to the flavored article is from 0.001 to 0.002 weight percent, based on the total weight of the flavored article.

In some embodiments, the concentration of the cream flavor composition, when added to the flavored article is from 0.002 to 0.5 weight percent, based on the total weight of the flavored article. Alternatively, in some embodiments, the concentration of the cream flavor composition, when added to the flavored article is from 0.003 to 0.5 weight percent, based on the total weight of the flavored article. Alternatively, in some embodiments, the concentration of the cream flavor composition, when added to the flavored article is from 0.004 to 0.5 weight percent, based on the total weight of the flavored article. Alternatively, in some embodiments, the concentration of the cream flavor composition, when added to the flavored article is from 0.005 to 0.5 weight percent, based on the total weight of the flavored article. Alternatively, in some embodiments, the concentration of the cream flavor composition, when added to the flavored article is from 0.006 to 0.5 weight percent, based on the total weight of the flavored article. Alternatively, in some embodiments, the concentration of the cream flavor composition, when added to the flavored article is from 0.007 to 0.5 weight percent, based on the total weight of the flavored article. Alternatively, in some embodiments, the concentration of the cream flavor composition, when added to the flavored article is from 0.008 to 0.5 weight percent, based on the total weight of the flavored article. Alternatively, in some embodiments, the concentration of the cream flavor composition, when added to the flavored article is from 0.009 to 0.5 weight percent, based on the total weight of the flavored article. Alternatively, in some embodiments, the concentration of the cream flavor composition, when added to the flavored article is from 0.01 to 0.5 weight percent, based on the total weight of the flavored article. Alternatively, in some embodiments, the concentration of the cream flavor composition, when added to the flavored article is from 0.02 to 0.5 weight percent, based on the total weight of the flavored article. Alternatively, in some embodiments, the concentration of the cream flavor composition, when added to the flavored article is from 0.03 to 0.5 weight percent, based on the total weight of the flavored article. Alternatively, in some embodiments, the concentration of the cream flavor composition, when added to the flavored article is from 0.04 to 0.5 weight percent, based on the total weight of the flavored article. Alternatively, in some embodiments, the concentration of the cream flavor composition, when added to the flavored article is from 0.05 to 0.5 weight percent, based on the total weight of the flavored article. Alternatively, in some embodiments, the concentration of the cream flavor composition, when added to the flavored article is from 0.06 to 0.5 weight percent, based on the total weight of the flavored article. Alternatively, in some embodiments, the concentration of the cream flavor composition, when added to the flavored article is from 0.07 to 0.5 weight percent, based on the total weight of the flavored article. Alternatively, in some embodiments, the concentration of the cream flavor composition, when added to the flavored article is from 0.09 to 0.5 weight percent, based on the total weight of the flavored article. Alternatively, in some embodiments, the concentration of the cream flavor composition, when added to the flavored article is from 0.09 to 0.5 weight percent, based on the total weight of the flavored article. Alternatively, in some embodiments, the concentration of the cream flavor composition, when added to the flavored article is from 0.1 to 0.5 weight percent, based on the total weight of the flavored article. Alternatively, in some embodiments, the concentration of the cream flavor composition, when added to the flavored article is from 0.15 to 0.5 weight percent, based on the total weight of the flavored article. Alternatively, in some embodiments, the concentration of the cream flavor composition, when added to the flavored article is from 0.2 to 0.5 weight percent, based on the total weight of the flavored article. Alternatively, in some embodiments, the concentration of the cream flavor composition, when added to the flavored article is from 0.25 to 0.5 weight percent, based on the total weight of the flavored article. Alternatively, in some embodiments, the concentration of the cream flavor composition, when added to the flavored article is from 0.3 to 0.5 weight percent, based on the total weight of the flavored article. Alternatively, in some embodiments, the concentration of the cream flavor composition, when added to the flavored article is from 0.35 to 0.5 weight percent, based on the total weight of the flavored article. Alternatively, in some embodiments, the concentration of the cream flavor composition, when added to the flavored article is from 0.4 to 0.5 weight percent, based on the total weight of the flavored article. Alternatively, in some embodiments, the concentration of the cream flavor composition, when added to the flavored article is from 0.45 to 0.5 weight percent, based on the total weight of the flavored article.

In some embodiments, the concentration of the cream flavor composition, when added to the flavored article is 0.001, or 0.002, or 0.003, or, 0.004, or 0.005, or 0.006, or 0.007, or 0.008, or 0.009, or 0.01, or 0.02, or 0.03, or, 0.04, or 0.05, or 0.06, or 0.07, or 0.08, or 0.09, or 0.1, or 0.15, or 0.2, or 0.25, or 0.3, or 0.35, or 0.4, or 0.45, or 0.5 weight percent, based on the total weight of the flavored article.

In some embodiments, the concentration of the cream flavor composition, when added to the flavored article is 0.015 weight percent, based on the total weight of the flavored article.

### Flavored Article

In some embodiments, the present disclosure provides a flavored article comprising a composition according to an embodiment described herein.

As used herein, the term "flavored article" includes, but is not limited to foodstuffs of all kinds, confectionery products, baked products, sweet products, savory products, fermented products, dairy products, beverages, oral care products, nutraceuticals and pharmaceuticals.

Exemplary foodstuffs include, but are not limited to, chilled snacks, sweet and savory snacks, fruit snacks, chips/crisps, extruded snacks, tortilla/com chips, popcorn, pretzels, nuts, other sweet and savory snacks, snack bars, granola bars, breakfast bars, energy bars, fruit bars, other snack bars, meal replacement products, slimming products, convalescence drinks, ready meals, canned ready meals, frozen ready meals, dried ready meals, chilled ready meals, dinner mixes, meat analogues, frozen pizza, chilled pizza, soup, canned soup, dehydrated soup, instant soup, chilled soup, UHT soup, frozen soup, pasta, canned pasta, dried pasta, chilled/fresh pasta, noodles, plain noodles, instant noodles, cups/bowl instant noodles, pouch instant noodles, chilled noodles, snack noodles, dried food, dessert mixes, sauces, dressings and condiments, herbs and spices, spreads, jams and preserves, honey, chocolate spreads, nutbased spreads, and yeast-based spreads.

Exemplary confectionery products include, but are not limited to, chewing gum (which includes sugarized gum, sugar-free gum, functional gum and bubble gum), centerfill confections, chocolate and other chocolate confectionery, medicated confectionery , lozenges, tablets, pastilles, mints, standard mints, power mints, chewy candies, hard candies, boiled candies, breath and other oral care films or strips, candy canes, lollipops, gummies, jellies, fudge, caramel, hard and soft panned goods, toffee, taffy, liquorice, gelatin candies, gum drops, jelly beans, nougats, fondants, combinations of one or more of the above, and edible flavor compositions incorporating one or more of the above.

Exemplary baked products include, but are not limited to, bread, packaged or industrial bread, unpackaged or artisanal bread, pastries, cakes, packaged or industrial cakes, unpackaged orartisanal cakes, cookies, chocolate coated biscuits, sandwich biscuits, filled biscuits, savory biscuits and crackers, bread substitutes.

Exemplary sweet products include, but are not limited to, breakfast cereals, ready-to-eat ("RTE") cereals, family breakfast cereals, flakes, muesli, other ready to eat cereals, children's breakfast cereals, hot cereals.

Exemplary savory products include, but are not limited to, salty snacks (potato chips, crisps, nuts, tortilla-tostada, pretzels, cheese snacks, corn snacks, potato-snacks, ready-to-eat popcorn, microwaveable popcorn, pork rinds, nuts, crackers, cracker snacks, breakfast cereals, meats, aspic, cured meats (ham, bacon), luncheon/breakfast meats (hotdogs, cold cuts, sausage), tomato products, margarine, peanut butter, soup (clear, canned, cream, instant, ultrahigh temperature "UHT"),canned vegetables, pasta sauces.

Exemplary dairy products include, but are not limited to, cheese, cheese sauces, cheese-based products, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, dairy products, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavored, functional and other condensed milk, flavored milk drinks, dairy only flavored milk drinks, flavored milk drinks with fruit juice, soy milk, sour milk drinks, fermented dairy drinks, coffee whiteners, powder milk, flavored powder milk drinks, cream, yoghurt, plain/natural yoghurt, flavored yoghurt, fruited yoghurt, probiotic yoghurt, drinking yoghurt, regular drinking yoghurt, probiotic drinking yoghurt, chilled and shelf-stable desserts, dairy-based desserts, soy-based desserts.

Exemplary beverages include, but are not limited to, flavored water, soft drinks, fruit drinks, coffee-based drinks, tea-based drinks, juice-based drinks (includes fruit and vegetable), milk-based drinks, gel drinks, carbonated or non-carbonated drinks, powdered drinks, alcoholic or non-alcoholic drinks, and ready to drink liquid formulations of these beverages.

Exemplary fermented foods include, but are not limited to, cheese and cheese products, meat and meat products, soy and soy products, fish and fish products, grain and grain products, fruit and fruit products.

### Non-Animal Protein Materials and Products Made Therefrom

Products intended to replace or substitute meat or dairy products often rely on various non-animal-based materials, such as starches and proteins derived from plants, algae, and fungi, to simulate the texture and flavor of meat or dairy. Non-limiting examples of such plant proteins include soy proteins, pea proteins, bean proteins, grain proteins, and the like. Due to compositional differences between such plant-based materials and animal-derived materials, such as a lack of glutamate-containing proteins and glutathione, these products can lack the umami and/or kokumi taste that consumers traditionally associate with meat or dairy products.

Thus, in certain aspects, the disclosure provides a flavored product comprising a plant-based material (such as a plant-based starch, a plant-based protein, or a combination thereof) and the compositions disclosed herein. In some further embodiments, the flavored product can include any features of combination of features set forth above for the compositions. In some embodiments, the flavored product is a beverage, such as soy milk, almond milk, rice milk, oat milk, a protein drink, a meal-replacement drink, or other like product. In some other embodiments, the flavored product is a meat-replacement product, such as a plant-based chicken product (such as a plant-based chicken nugget), a plant-based beef product (such as a plant-based burger), and the like. In some other embodiments, the flavored product is a protein powder, a meal-replacement powder, a plant-based creamer for coffee or tea, and the like. In certain further embodiments, any such products contain additional ingredients, and have additional features, as are typically used in the preparation and/or manufacture of such products. For example, the compositions may be combined with other flavors and taste modifiers, and may even be encapsulated in certain materials, according to known technologies in the relevant art.

In some further embodiments analogous to the above embodiments, proteins or starches from algal or fungal sources can be used instead of or in combination with plant starches or proteins.

### Non-Meat Protein Materials and Products Made Therefrom

Certain non-meat animal proteins, such as dairy proteins and proteins from bone broth, are commonly used in food products, and are also sold as the primary ingredient in certain protein powders. Such proteins can impart flavors that lack the full umami or kokumi taste that consumers may desire. This is especially true for protein isolates, such as protein isolates of whey protein, collagen protein, casein proteins, and the like. Thus, the present disclosure provides ingestible compositions that include non-meat animal proteins and the compositions disclosed herein. The compositions disclosed herein can be present in any suitable combination, according to the embodiments set forth in the preceding sections of the present disclosure. In some embodiments, the non-meat animal protein is a bone protein, such as a collagen protein derived from the bones of an animal, such as a cow, pig, donkey, horse, chicken, duck, goat, goose, rabbit, lamb, sheep, buffalo, ostrich, camel, and the like. In some embodiments, the non-meat animal protein is a milk protein, such as a whey protein, a casein protein, or any combination thereof. The milk can be the milk of any suitable animal, such as a cow, donkey, horse, sheep, buffalo, camel, and the like.

The compositions disclosed herein can also be included in certain food or beverage products that include animal milk or materials derived from animal milk. Such products include cheeses, cheese spreads, yogurt, kefir, milk, processed dairy products, cottage cheese, sour cream, butter, and the like.

### EXAMPLES

### Example 1: Effects of a Composition According to an Embodiment Presented Herein on the Sensory Properties of a Solution of Pea Protein.

*Preparation of a Pea Protein Solution:* Water was heated to a temperature of 55 degrees Celsius, and sucrose and pea protein was added in amounts sufficient to generate final concentrations of 3 weight percent for each of the sucrose and pea protein. The mixture of sucrose, pea protein and water were then blended using an Ultra-Turax T50 Dispersion tool, at a speed setting of 2, for 10 min. The resulting solution was divided into separate 200 ml containers and pasteurized. The pasteurized solutions were stored at 4 degrees Celsius.

*Sensory Evaluations:* The following test solutions were generated:
1. Control Solution: Pea protein solution.
2. Test Solution A (not part of the invention): Pea protein solution + 0.03 weight percent yeast lysate (MODUMAX by DSM).
3. Test Solution B (not part of the invention) : Pea protein solution + 0.03 weight percent yeast lysate
   (MODUMAX by DSM) + 0.05 weight percent soy masking composition (comprising glucosylated steviol glycosides and salt).
4. Test Solution C: Pea protein solution + 0.03 weight percent yeast lysate (MODUMAX by DSM) + 0.05 weight percent soy masking composition (comprising glucosylated steviol glycosides and salt) + 0.015 weight percent cream flavor.
5. Test Solution D: Pea protein solution + 0.03 weight percent yeast lysate (MODUMAX by DSM) + 0.05 weight percent soy masking composition (comprising glucosylated steviol glycosides and salt) + 0.06 weight percent vanilla flavor.

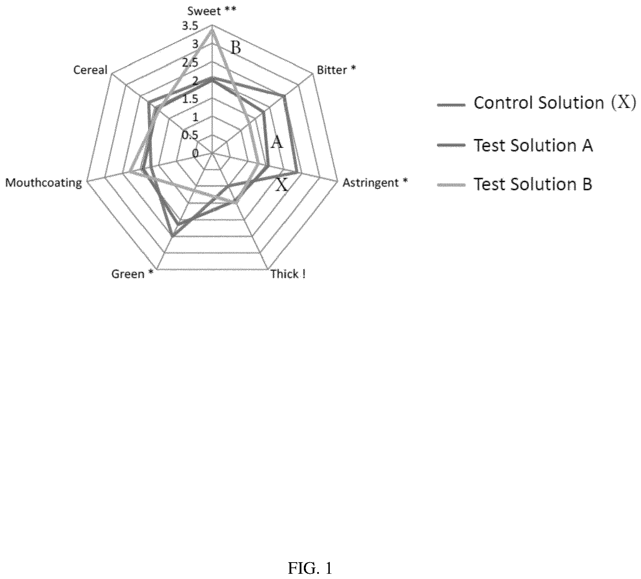

Test solutions 1 through 5 were evaluated using a panel of subjects. The results are shown in FIGS. 1 through 3 and Tables 1 through 3 below.

**Table 1:**

| Sensory Property | Control Solution | Test Solution A | Test Solution B | Probability |
|---|---|---|---|---|
| Sweet | 2.07 B | 2.00 B | 3.36 A | 0.0011 ** |
| Bitter | 2.05 A | 1.79 AB | 1.29 B | 0.0485 * |
| Astringency | 2.36 A | 1.57 B | 1.29 B | 0.0111 * |
| Thick | 1.00 B | 1.43 A | 1.50 A | 0.0817 ! |
| Green | 2.50 A | 2.14 A | 1.14 B | 0.0144 * |
| Mouthcoating | 1.71 | 1.93 | 2.29 | 0.4046 |
| Cereal | 2.21 | 1.93 | 1.86 | 0.705 |

0.03 Weight percent yeast lysate reduced the perceived astringency and bitterness of the pea protein solution (see Control Solution and Test Solution A, and FIG. 1). The addition of 0.05 weight percent soy masking composition (comprising glucosylated steviol glycosides and salt) further reduced the perceived bitterness and green character of the pea protein solution (see Control Solution, Test Solution A and Test Solution B, and FIG. 1). Additionally, the addition of 0.05 weight percent soy masking composition (comprising glucosylated steviol glycosides and salt) increased the perceived sweetness of the pea protein solution.

**Table 2:**

| Sensory Property | Control Solution | Test Solution A | Test Solution C | Probability |
|---|---|---|---|---|
| Sweet | 1.88 B | 2.06 B | 3.44 A | 0.0003 ** |
| Bitter | 2.06 A | 1.63 B | 0.88 C | 0.0003 ** |
| Astringency | 2.31 A | 2.06 A | 1.06 B | 0.0140 * |
| Mouthcoating | 1.56 B | 1.56 B | 2.25 A | 0.0952 ! |
| Thick | 0.75 A | 0.88 B | 1.75 A | 0.0069 ** |
| Green | 2.50 A | 2.19 A | 1.50 B | 0.0243 * |
| Creamy | 0.25 B | 0.69 B | 2.00 A | 0.30 |

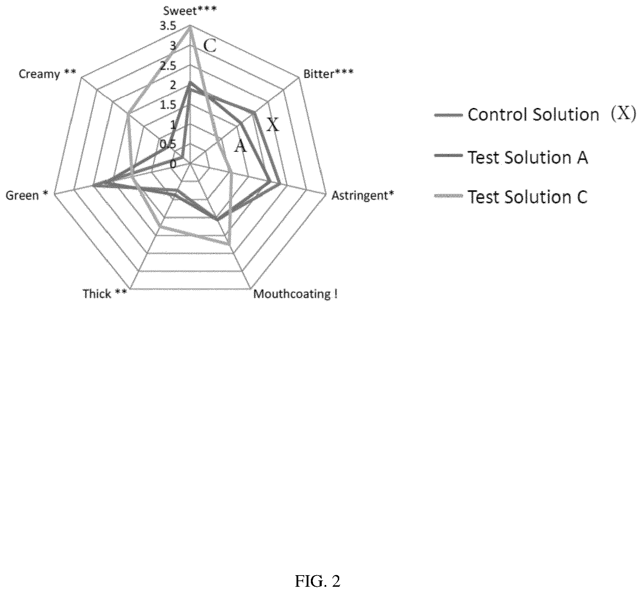

0.03 Weight percent yeast lysate reduced the perceived bitterness of the pea protein solution (see Control Solution and Test Solution A, and FIG. 2). The addition of 0.05 weight percent soy masking composition (comprising glucosylated steviol glycosides and salt) and cream flavor further reduced the perceived bitterness of the pea protein solution (see Control Solution, Test Solution A and Test Solution C, and FIG. 2). Additionally, the addition of 0.05 weight percent soy masking composition (comprising glucosylated steviol glycosides and salt) and cream flavor increased the perceived sweetness, mouth coating, thickness and cream character of the pea protein solution. Moreover, a decreased perception of green character was noted.

**Table 3:**

| Sensory Property | Control Solution | Test Solution A | Test Solution C | Probability |
|---|---|---|---|---|
| Sweet | 2.44 B | 2.50 B | 3.56 A | 0.0016 |
| Bitter | 2.94 A | 2.13 B | 1.31 C | 0.0103 |
| Green | 2.75 A | 2.31 A | 1.31 B | 0.0077 |
| Creamy | 0.50 C | 1.31 B | 2.13 A | 0.014 |
| Vanilla | 0.44 B | 0.25 B | 3.56 A | < 0.0001 |
| Astringency | 2.38 | 2 | 1.81 | 0.3927 |
| Mouthcoating | 1.38 | 1.94 | 2 | 0.2233 |
| Thick | 1.31 | 2 | 2.13 | 0.1314 |

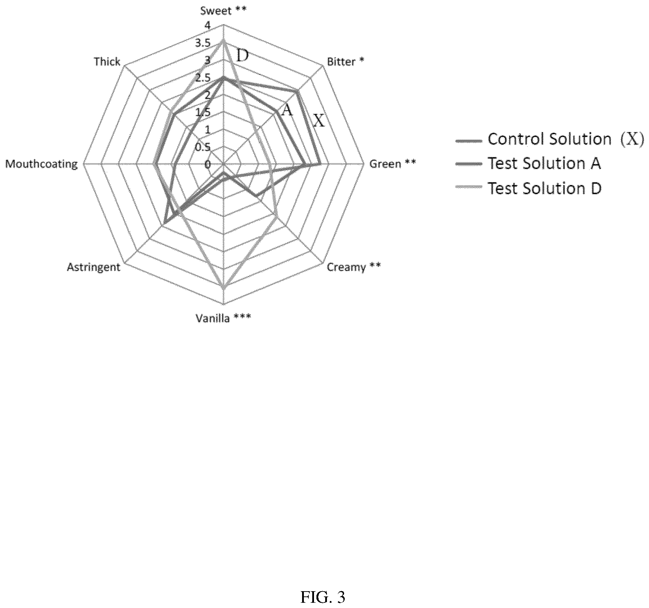

0.03 Weight percent yeast lysate reduced the perceived and bitterness, and increased the perception of cream of the pea protein solution (see Control Solution and Test Solution A, and FIG. 3). The addition of 0.05 weight percent soy masking composition (comprising glucosylated steviol glycosides and salt) and vanilla flavor further reduced the perceived bitterness of the pea protein solution (see Control Solution, Test Solution A and Test Solution D, and FIG. 3). Additionally, the addition of 0.05 weight percent soy masking composition (comprising glucosylated steviol glycosides and salt) and cream flavor increased the perceived sweetness, vanilla and cream.

An additional study was performed, using the following test solutions:
6. Control Solution: Pea protein solution.
7. Test Solution E (not part of the invention) : Pea protein solution + 0.05 weight percent soy masking composition (comprising glucosylated steviol glycosides and salt).
8. Test Solution F (not part of the invention) : Pea protein solution + 0.015 weight percent cream flavor.
9. Test Solution G (not part of the invention): Pea protein solution + 0.06 weight percent vanilla flavor.

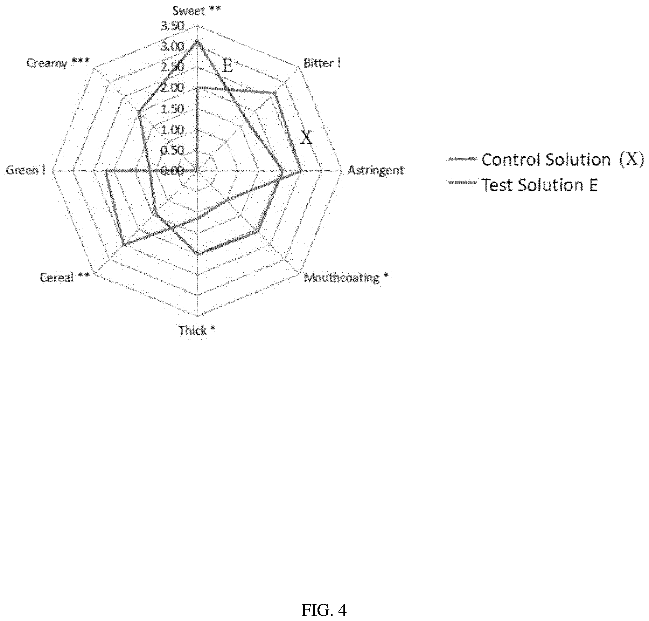

Test solutions 6 through 9 were evaluated using a panel of subjects. The results are shown in FIGS. 4 through 6 and Tables 4 through 6 below.

**Table 4:**

| Sensory Property | Control Solution | Test Solution E | Probability |
|---|---|---|---|
| Sweet ** | 2.00 | 3.14 | 0.0029 ** |
| Bitter ! | 2.64 | 1.71 | 0.0876 * |
| Astringency | 2.50 | 2.07 | 0.40 |
| Mouthcoating * | 1.00 | 2.07 | 0.0415 * |
| Thick * | 1.14 | 2.00 | 0.0167 * |
| Cereal ** | 2.50 | 1.43 | 0.0034 ** |
| Green ! | 2.21 | 1.14 | 0.0517 ! |
| Creamy *** | 0.00 | 2.00 | 0.09 |

Seven statistically different sensory effects were found upon the addition of 0.05 weight percent soy masking composition (comprising glucosylated steviol glycosides and salt) to a pea protein solution: a decrease in the perception of the descriptors "bitter", "cereal" and "green" was noted. Conversely, an increase in the perception for descriptors "sweet", "mouthcoating", "thick" and "creamy" was noted. See FIG. 4.

**Table 5:**

| Sensory Property | Control Solution | Test Solution F | Probability |
|---|---|---|---|
| Sweet ** | 1.93 | 2.36 | 0.0781 ! |
| Bitter ! | 2.5 | 2.29 | 0.5338 |
| Astringency > | 2.36 | 2.36 | >0.9999 |
| Mouthcoating ! | 1.07 | 1.43 | 0.0941 ! |
| Thick | 0.93 | 1.14 | 0.1996 |
| Cereal | 2.21 | 2.29 | 0.8461 |
| Green | 2.14 | 1.71 | 0.1723 |
| Creamy | 0.14 | 0.5 | 0.4108 |

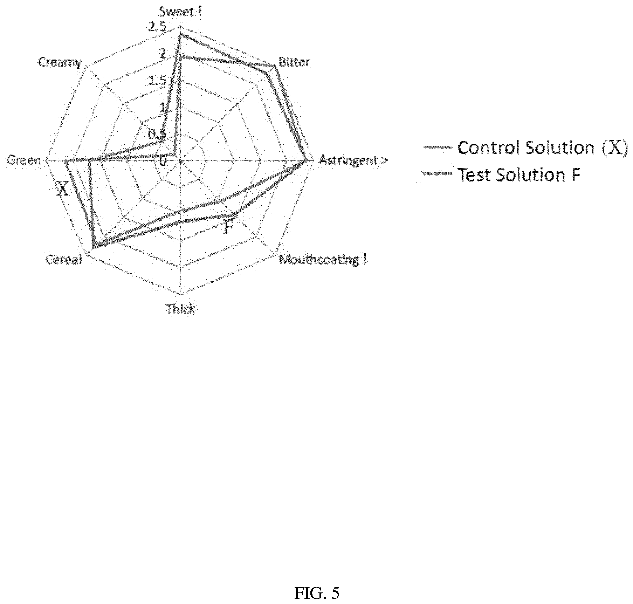

Two statistically different sensory effects were found upon the addition of 0.06 weight percent vanilla flavor to a pea protein solution: a decrease in the perception of the descriptor "astringency" was noted. Conversely, an increase in the perception for descriptors "sweet", and "mouthcoating" was noted. See FIG. 5.

**Table 6:**

| Sensory Property | Control Solution | Test Solution G | Probability |
|---|---|---|---|
| Sweet ! | 2.19 | 2.63 | 0.09 |
| Bitter | 2.06 | 2.31 | 0.47 |
| Astringency ! | 2.44 | 1.81 | 0.10 |
| Mouthcoating | 1.63 | 1.75 | 0.82 |
| Thick | 1.56 | 1.31 | 0.45 |
| Cereal | 2.63 | 1.75 | 0.13 |
| Green | 1.63 | 1.44 | 0.71 |
| Creamy * | 0.63 | 2.13 | 0.03 |
| Vanilla ** | 0.81 | 3.38 | 0.00 |

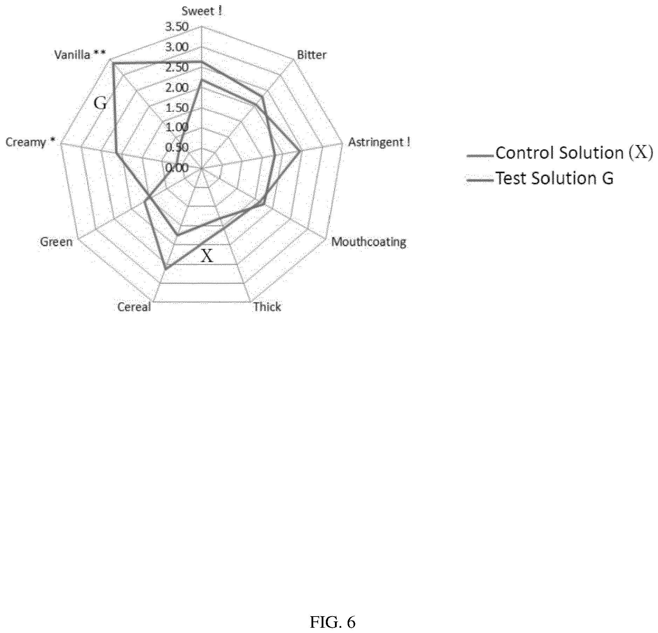

Four statistically different sensory effects were found upon the addition of 0.015 weight percent cream flavor to a pea protein solution: an increase in the perception for descriptors "sweet", "creamy", and "vanilla" was noted. See FIG. 6.

## Claims

1. A composition comprising
(a) a yeast lysate; and
(b) a flavor composition comprising: (i) a soy masking
composition comprising steviol glycosides having additional glucose units added to the base steviol glycoside molecules via enzymatic glucosylation; and (ii) a vanilla flavor composition comprising vanillin or (iii) a cream flavor composition comprising lactones; and
(c) a non-animal protein;
wherein a concentration of yeast lysate in the composition ranges from 0.0025 weight percent to 0.2 weight percent, based on the total weight of the composition.

2. Use of a flavor modifying composition for improving a flavor profile of a flavored article, wherein the flavored article comprises a non-animal protein having an off taste, and wherein the flavor modifying composition comprises:
(a) a yeast lysate; and
(b) a flavor composition comprising:
(i) a soy masking
composition comprising steviol glycosides having additional glucose units added to the base steviol glycoside molecules via enzymatic glucosylation; and
(ii) a vanilla flavor composition comprising vanillin or
(iii) a cream flavor composition comprising lactones;
wherein a concentration of yeast lysate in the flavored article ranges from 0.0025 weight percent to 0.2 weight percent, based on the total weight of the flavored article.

3. The use of claim 2, wherein improving a flavor profile comprises: reducing bitterness, reducing astringency, increasing sweetness, reducing green character, increasing mouthcoating, increasing thickness, increasing cream character, increasing vanilla character, reducing cereal character, or any combination thereof.

4. A flavored article, which comprises the composition of claim 1, wherein a concentration of yeast lysate in the flavored article ranges from 0.0025 weight percent to 0.2 weight percent, based on the total weight of the flavored article.

5. The flavored article of claim 4, wherein the flavored article is a food or beverage product.

6. A method of producing a flavored article according to claim 4 or 5, the method comprising:
providing a flavored article comprising a non-animal protein having an off taste; and
introducing to the flavored article a flavor modifying composition comprising:
(a) a yeast lysate; and
(b) a flavor composition comprising:
(i) a soy masking composition comprising steviol glycosides having additional glucose units added to the base steviol glycoside molecules via enzymatic glucosylation; and
(ii) a vanilla flavor composition comprising vanillin or
(iii) a cream flavor composition comprising lactones;
wherein a concentration of yeast lysate in the flavored article ranges from 0.0025 weight percent to 0.2 weight percent, based on the total weight of the flavored article.

## Patentansprüche

1. Zusammensetzung, umfassend
(a) ein Hefelysat und
(b) eine Geschmackstoffzusammensetzung, umfassend:
(i) eine Sojamaskierungszusammensetzung, die Steviolglykoside mit zusätzlichen, durch enzymatische Glucosylierung an die Basissteviolglykosidmoleküle addierten Glucoseeinheiten umfasst, und (ii) eine Vanillin umfassende Vanillegeschmackzusammensetzung oder (iii) eine Lactone umfassende Sahnegeschmackzusammensetzung und
(c) ein nichttierisches Protein,
wobei die Konzentration an Hefelysat in der Zusammensetzung im Bereich von 0,0025 Gew.-% bis 0,2 Gew.-% liegt, bezogen auf das Gesamtgewicht der Zusammensetzung.

2. Verwendung einer geschmacksmodifizierenden Zusammensetzung zur Verbesserung eines Geschmacksprofils eines aromatisierten Artikels, wobei der aromatisierte Artikel ein nichttierisches Protein mit unangenehmem Geschmack umfasst und wobei die geschmacksmodifizierende Zusammensetzung Folgendes umfasst:
(a) ein Hefelysat und
(b) eine Geschmackstoffzusammensetzung, umfassend:
(i) eine Sojamaskierungszusammensetzung, die Steviolglykoside mit zusätzlichen, durch enzymatische Glucosylierung an die Basissteviolglykosidmoleküle addierten Glucoseeinheiten umfasst, und (ii) eine Vanillin umfassende Vanillegeschmackzusammensetzung oder (iii) eine Lactone umfassende Sahnegeschmackzusammensetzung,
wobei die Konzentration an Hefelysat in dem aromatisierten Artikel im Bereich von 0,0025 Gew.-% bis 0,2 Gew.-% liegt, bezogen auf das Gesamtgewicht des aromatisierten Artikels.

3. Verwendung nach Anspruch 2, wobei die Verbesserung eines Geschmacksprofils Folgendes umfasst: Verringerung der Bitterkeit, Verringerung der Adstringenz, Erhöhung der Süße, Verringerung des grünen Charakters, Erhöhung der Auskleidung des Mundes, Erhöhung der Dicke, Erhöhung des Sahnecharakters, Erhöhung des Vanillecharakters, Verringerung des Getreidecharakters oder eine beliebige Kombination davon.

4. Aromatisierter Artikel, umfassend die Zusammensetzung nach Anspruch 1, wobei die Konzentration an Hefelysat in dem aromatisierten Artikel im Bereich von 0,0025 Gew.-% bis 0,2 Gew.-% liegt, bezogen auf das Gesamtgewicht des aromatisierten Artikels.

5. Aromatisierter Artikel nach Anspruch 4, wobei es sich bei dem aromatisierten Artikel um ein Nahrungsmittel- oder Getränkeprodukt handelt.

6. Verfahren zur Herstellung eines aromatisierten Artikels nach Anspruch 4 oder 5, wobei das Verfahren Folgendes umfasst:
die Bereitstellung eines ein nichttierisches Protein mit unangenehmem Geschmack umfassenden aromatisierten Artikels und das Einbringen einer geschmacksmodifizierenden Zusammensetzung, die Folgendes umfasst:
(a) ein Hefelysat und
(b) eine Geschmackstoffzusammensetzung, umfassend:
(i) eine Sojamaskierungszusammensetzung, die Steviolglykoside mit zusätzlichen, durch enzymatische Glucosylierung an die Basissteviolglykosidmoleküle addierten Glucoseeinheiten umfasst, und (ii) eine Vanillin umfassende Vanillegeschmackzusammensetzung oder (iii) eine Lactone umfassende Sahnegeschmackzusammensetzung,
in den aromatisierten Artikel, wobei die Konzentration an Hefelysat in dem aromatisierten Artikel im Bereich von 0,0025 Gew.-% bis 0,2 Gew.-% liegt, bezogen auf das Gesamtgewicht des aromatisierten Artikels.

## Revendications

1. Composition comprenant
(a) un lysat de levure ; et
(b) une composition d'arôme comprenant : (i) une composition de masquage de soja comprenant des glycosides de stéviol ayant des motifs de glucose supplémentaires ajoutés aux molécules de glycoside de stéviol de base via une glucosylation enzymatique ; et (ii) une composition d'arôme de vanille comprenant de la vanilline ou (iii) une composition d'arôme de crème comprenant des lactones ; et
(c) une protéine non animale ;
une concentration de lysat de levure dans la composition se situant dans la plage de 0,0025 pour cent en poids à 0,2 pour cent en poids, sur la base du poids total de la composition.

2. Utilisation d'une composition de modification d'arôme pour améliorer un profil d'arôme d'un article aromatisé, l'article aromatisé comprenant une protéine non animale ayant un mauvais goût, et la composition de modification d'arôme comprenant :
(a) un lysat de levure ; et
(b) une composition d'arôme comprenant :
(i) une composition de masquage de soja comprenant des glycosides de stéviol ayant des motifs de glucose supplémentaires ajoutés aux molécules de glycoside de stéviol de base via une glucosylation enzymatique ; et
(ii) une composition d'arôme de vanille comprenant de la vanilline ou (iii) une composition d'arôme de crème comprenant des lactones ;
une concentration de lysat de levure dans l'article aromatisé se situant dans la plage de 0,0025 pour cent en poids à 0,2 pour cent en poids, sur la base du poids total de l'article aromatisé.

3. Utilisation selon la revendication 2, l'amélioration d'un profil d'arôme comprenant : la réduction de l'amertume, la réduction de l'astringence, l'augmentation de la sucrosité, la réduction du caractère vert, l'augmentation de l'enveloppement du palais, l'augmentation de l'épaisseur, l'augmentation du caractère de crème, l'augmentation du caractère de vanille, la réduction du caractère de céréales ou une quelconque combinaison correspondante.

4. Article aromatisé, qui comprend la composition selon la revendication 1, une concentration de lysat de levure dans l'article aromatisé se situant dans la plage de 0,0025 pour cent en poids à 0,2 pour cent en poids, sur la base du poids total de l'article aromatisé.

5. Article aromatisé selon la revendication 4, l'article aromatisé étant un produit alimentaire ou un produit de boisson.

6. Procédé de production d'un article aromatisé selon la revendication 4 ou 5, le procédé comprenant :
la fourniture d'un article aromatisé comprenant une protéine non animale ayant un mauvais goût ; et
l'introduction, dans l'article aromatisé, d'une composition de modification d'arôme comprenant :
(a) un lysat de levure ; et
(b) une composition d'arôme comprenant :
(i) une composition de masquage de soja comprenant des glycosides de stéviol ayant des motifs de glucose supplémentaires ajoutés aux molécules de glycoside de stéviol de base via une glucosylation enzymatique ; et
(ii) une composition d'arôme de vanille comprenant de la vanilline ou (iii) une composition d'arôme de crème comprenant des lactones ;
une concentration de lysat de levure dans l'article aromatisé se situant dans la plage de 0,0025 pour cent en poids à 0,2 pour cent en poids, sur la base du poids total de l'article aromatisé.
